# EUROPEAN PATENT SPECIFICATION

(11) **EP 2 705 994 B1**
(45) Date of publication and mention of the grant of the patent: **20.05.2015**
(21) Application number: 12183857.7
(22) Date of filing: 11.09.2012
(51) Int. Cl.: B60T 13/66, B60T 17/22

(54) **Control arrangement for a rail vehicle**
Steueranordnung für ein Schienenfahrzeug
Agencement de commande pour véhicule ferroviaire

(43) Date of publication of application: 12.03.2014
(73) Proprietor: Bombardier Transportation GmbH, 10785 Berlin (DE)
(72) Inventor: Maistrello, Simone, 17041 Altare (IT); Brignone, Christian, 17100 Savona (IT); Sala, Paolo, 20014 Nerviano (IT)
(74) Representative: Cohausz & Florack

(56) References cited:
- EP-A2- 1 138 570
- WO-A1-2009/127597
- DE-A1- 19 848 992
- GB-A- 2 402 983

## Description

### BACKGROUND OF THE INVENTION

The present invention relates to a control arrangement for a train set, comprising a first control device associated to a first driver's stand of a first vehicle of the train set, a second control device associated to a second driver's stand of a second vehicle of the train set, and a data bus system connecting the first control device and the second control device to at least one controlled component of the train set. The first control device is configured to assume, in an activated state of the first driver's stand during a normal operational state of the train set, a role as a master control device controlling the at least one controlled component via the data bus system, while the second control device is configured to assume, in an activated state of the second driver's stand during the normal operational state of the train set, the role as the master control device controlling the at least one controlled component via the data bus system. The invention also relates to a corresponding method for controlling a train set.

Train sets of modern rail vehicles with bidirectional operability, in particular so-called electric multiple units (EMU), light-rail vehicles (LRV) or other fixed composition train sets, typically show an architecture with the active components providing vital train functions such as traction and braking etc. distributed all over the train set. Control of these components generally is provided by a suitable control arrangement, often referred to as a so-called train control management system (TCMS) comprising control devices associated to the driver's stands of the two end vehicles. The driver typically activates the driver's stand actually used such that the associated control device assumes the role of the master control device controlling the active components to be controlled via a suitable communication path as a function of the inputs on the driver.

In many cases, the communication path between the master control device and the controlled active components, during normal operation of the train set, is provided by a data bus system, typically a serial data bus system.

Different data bus system architectures are typically used in the train control management system (TCMS) of rail vehicles. One variant is to have a superordinate train bus system, often referred to as a so-called wire train bus (WTB), extending over the train set and providing communication between so-called vehicle bus systems, often referred to as multifunction vehicle bus (MVB), individual to each vehicle of the train set. In other variants, in particular, in train sets with a fixed vehicle composition (such as EMUs and LRVs), the superordinate train bus system is dispensed with and a network of the individual multifunction vehicle buses (MVB) is formed using so-called bus couplers and, eventually, bus repeaters along the train set to provide data communication from one end of the vehicle to its other end. Since many of the active components to be controlled via the data bus system provide safety relevant functions (such as traction and, in particular, braking), these data bus systems have to be designed according to international standards (such as UIC and IEC standards) in order to obtain safety approval for public operation.

One problem obviously arising in this safety context is the fact that an interruption in communication between the active master control device and the controlled components (e.g., due to a simple malfunction of components, a disruption of the connection caused by fire, mechanical influences etc.) may lead to safety critical situations where the driver may be deprived of appropriate control over the train set. Some vehicle control systems, in such a case of emergency, follow a rather straightforward control approach bringing the train set to an immediate stop.

However, there are certain scenarios, where such an immediate stop would even increase the risk of harm to the passengers of vehicle. For example, if the train, in case of a fire interrupting communication to the controlled components, stopped in a tunnel, on a bridge or any other location where rapid evacuation of the train is impossible, this would increase the risk for passengers to be harmed way more than continuing travel up to the next location where safe and rapid evacuation of the train is possible.

To avoid such potentially hazardous scenarios, typically, a certain redundancy of the control paths used for controlling the active components from the active master control device is required and provided. Such a redundant control path architecture is known, for example, from WO 2009/127597 A1 where an emergency control path (providing communication between the master control unit and each active component) that follows a specific emergency control regime and is separate from a normal control path (in the form of a conventional data bus system) is used for taking over control in case of an emergency.

Another redundant control path architecture is known, for example, from EP 1 231 121 A1 where two redundant data bus systems are used for connecting the master control device directly to each of the controlled components, such that control of the active components may be still maintained even if one of the data bus systems fails.

A disadvantage of both known redundant control path architectures is that each of the redundant control paths requires a direct connection between each of the redundant control paths and each of the individual active components to be controlled. Hence, a considerable effort has to be made for realizing the general initial outlay of the control system. Furthermore, later upgrade of existing (non-redundant) control systems to such architecture also requires considerable effort.

### SUMMARY OF THE INVENTION

The present invention is therefore based on the object of providing a control arrangement for a train set and a method for controlling a train set, which does not have the aforementioned drawbacks or only to a lesser extent and, in particular, allows a more simple outlay of the control system while being nevertheless reliable and safe. Furthermore, more simple redundancy upgrade of existing systems is also envisaged as an object of the present invention.

The present invention achieves this object starting from a control arrangement according to the preamble of claim 1 by the features disclosed in the characterising part of claim 1. It also achieves this object starting from a method according to the preamble of claim 11 by the features disclosed in the characterising part of claim 11.

The present invention is based on the technical teaching that a greatly simplified outlay of the control system, also allowing way easier upgrade of existing systems, may be achieved if a redundant control path, in emergency situations with interruption of the data bus system (used as the control path during normal operation) between the master control device and a critical number of controlled components, provides direct communication between the master control device and the other (non-master) control device at the other end of the train set to use still operative parts of the data bus system located between the other (non-master) control device and a (sufficient) number of controlled active components. Hence, basically, according to the present invention, the interrupted section of the data bus system is bypassed via such a redundant control path and the other (non-master) control device.

Such a solution has the great advantage that, unlike in the known systems, no full-size redundant control path has to be established between each of the control devices and each of the controlled components. Rather, a simple communication line providing emergency communication (eventually even restricted to vital core control functions, such as safety relevant control functions) between the two control devices is sufficient. Such an approach also greatly facilitates upgrade of existing control systems. A simple communication path between the two control devices without direct connection to the controlled components may be rather easily implemented in existing vehicles.

It will be further appreciated that the present invention allows easy implementation of the emergency communication system in addition to existing, safety approved control systems. Since the emergency communication system according to the present invention does not have to comprehensively interfere with the existing control system, in particular, the data bus system, implementation of the present invention will not cause any safety relevant issues requiring a new full-size approval procedure for the train set.

Hence, according to one aspect, the present invention relates to a control arrangement for a train set, comprising a first control device associated to a first driver's stand of a first vehicle of the train set, a second control device associated to a second driver's stand of a second vehicle of the train set, and a data bus system connecting the first control device and the second control device to at least one controlled component of the train set. The first control device is configured to assume, in an activated state of the first driver's stand during a normal operational state of the train set, a role as a master control device controlling the at least one controlled component via the data bus system. The second control device is configured to assume, in an activated state of the second driver's stand during the normal operational state of the train set, the role as the master control device controlling the at least one controlled component via the data bus system. Furthermore, there is provided an emergency communication arrangement. The emergency communication arrangement is configured to provide, in an emergency state with interrupted communication between the master control device and the at least one controlled component via the data bus system, an emergency communication channel separate from the data bus system between the master control device and a slave control device, the slave control device being the one of the first control device and the second control device not forming the master control device. The master control device is configured to control, in the emergency state, the at least one controlled component via the emergency communication channel, the slave control device and a non-interrupted part of the data bus system between the slave control device and the at least one controlled component.

By this means, the emergency communication arrangement according to the present invention provides a simple bypass of the interrupted part of the data bus system via the emergency communication channel, the slave control device and the intact part of the data bus system (between the slave control device and the respective controlled component) without the necessity of providing a direct connection between the emergency communication channel and the respective controlled component.

It will be appreciated that the emergency communication channel between the master control device and the slave control device may be provided by any suitable means allowing transmission of appropriate control signals from the master control device to the slave control device. In particular, a specific emergency communication protocol may be implemented within the master control device and the slave control device comprising only a limited set of predefined instructions and responses, respectively, such that only specific control functions (in particular, vital and/or safety relevant control functions) may still be executed in case of such an emergency situation.

In the most simple case a simple communication line linking the two control devices and being activated in case of such an emergency situation may be sufficient to implement the emergency communication channel. Preferably, the emergency communication arrangement comprises at least one emergency communication unit. This emergency communication unit may be configured to activate the emergency communication channel. Activation of the emergency communication channel may ensue in response to detection of an interruption of the data bus system and/or in response to a corresponding input of the driver.

It will be appreciated that, basically, one single emergency communication unit per train set may be sufficient. However, preferably, the emergency communication arrangement comprises a master emergency communication unit associated to the master control unit and a slave emergency communication unit associated to the slave control unit. In such a case with two emergency communication units, each one of those two may in close spatial proximity to the associated control unit such that the communication line between the two emergency communication units extending along the train set (typically through a plurality of intermediate vehicles) may be of particularly simple design. This is particularly beneficial for upgrade solutions on existing vehicle designs, but, of course, also reduces the effort necessary for new vehicle outlays.

Preferably, the emergency communication arrangement comprises at least one backbone emergency communication line system separate from the data bus system and configured to connect the master control device and the slave control device, the backbone emergency communication line system. Preferably, such a backbone emergency communication line system is arranged spatially remote from the data bus system such that the risk of local hazardous incidents (such as fire, local mechanical damage, etc.) affecting both the data bus system and the backbone emergency communication line system is reduced as far as possible. It will be appreciated that, as a further benefit of the present invention, the simple design of such a backbone emergency communication line system facilitates reinforcement and strengthening of the backbone emergency communication line system against external influences (such as fire, heat, mechanical impact etc.). Hence, despite such additional measures enhancing robustness of the backbone emergency communication line system, a comparatively inexpensive may be obtained.

As mentioned above, any desired and suitable outlay may be selected for the backbone emergency communication line system. Preferably, a backbone emergency data bus system, in particular, a serial emergency data bus system, is used. Such a solution using a data bus system has the advantage that, if at all, the control messages exchanged between the control devices do only have to be modified to a limited extent. Hence, in the simplest case, the control messages produced by and exchanged between the control devices remain substantially unchanged during emergency operation.

Preferably, the emergency communication arrangement comprises two emergency communication units, one assuming the role of a master emergency communication unit and the other one assuming the role of a slave emergency communication unit, the backbone emergency communication line system then connecting the master emergency communication unit and the slave emergency communication unit. Thus, the backbone emergency communication line system may be of particularly simple design.

The two control devices may be of any suitable design generating suitable control data for the respective controlled component. Preferably, at least one of the first control device and the second control device comprises a control unit configured to assume, in an activated state, a role of a master control unit controlling, during the normal operational state of the train set, the at least one controlled component via the data bus system. In this case, the emergency communication unit, at least in the emergency state, is connected to the master control unit via a master control unit emergency communication line.

It will be appreciated that at least part of this master control unit emergency communication line may be provided by the data bus system. Preferably, however, the master control unit emergency communication line is a communication line, separate and independent from the data bus system. This has the advantage that a fault in the data bus system does not affect emergency communication between the master control unit and the master emergency communication unit.

Again, the master control unit emergency communication line may be of any desired and suitable design. Preferably, the master control unit emergency communication line is a master emergency data bus line, in particular, a serial emergency data bus line. Again, this has the advantages outlined above with respect to the type and outlay of the control messages exchanged during emergency operations.

The role and functionality of the emergency communication unit may vary in different embodiments of the present invention. In some cases, the emergency communication unit is configured to receive, at least in the emergency state, input control data via the master control unit emergency communication line from the master control unit. The emergency communication unit may further be configured to forward, at least in the emergency state, output control data derived from the input control data towards the controlled component via the backbone emergency communication line system. In particular, the emergency communication unit may modify the input control data to obtain the output control data. Such a scenario may be suitable where the format and/or protocol used for the input control data is not (fully) compatible with the format and/or protocol to be used for the transmission over the backbone emergency communication line system.

In addition or as an alternative, the emergency communication unit may further be configured to provide, at least in the emergency state, a master-to-backbone communication connection between the master control unit emergency communication line and the backbone emergency communication line system, thereby enabling transfer of the input control data from the master control unit via the master control unit emergency communication line, the master-to-backbone communication connection and the backbone emergency communication line system towards the controlled component.

Hence, the emergency communication unit (e.g. in a simple switching operation triggered by the detection of an emergency situation) may simply provide a bypass connection between the master control unit emergency communication line and the backbone emergency communication line system. In such a case, during emergency operation, at least part of the control messages exchanged between the master control unit and the slave control unit do not undergo any modification in the emergency communication unit, but are simply routed through the emergency communication unit.

It will be appreciated that, with certain preferred embodiments of the invention, the emergency communication arrangement may comprise a slave emergency communication unit (associated to the slave control device), which is configured to receive, at least in the emergency state, the output control data via the backbone emergency communication line system from the master emergency communication unit. The slave emergency communication unit may then be configured to forward, in response to receipt of the output control data via the backbone emergency communication line system, further output control data to a slave control unit of the slave control device via a slave control unit emergency communication line (connecting the slave emergency communication unit and the slave control unit).

It will be appreciated that at least part of this slave control unit emergency communication line may be provided by the data bus system. Preferably, however, the slave control unit emergency communication line is a communication line separate and independent from the data bus system. This has the advantage that a fault in the data bus system does not affect emergency communication between the slave control unit and the slave emergency communication unit.

Basically, this slave emergency communication unit may provide the same functionality as the master emergency communication unit. Hence, during emergency operation, the slave emergency communication unit may, for example, also assume a similarly active role in modifying the output control messages (i.e. the output control data) received via the backbone emergency communication line system into further output control data of appropriate format and/or protocol for forwarding these further output control data to the slave control device.

In addition or as an alternative, the slave emergency communication unit may be configured to provide, at least in the emergency state, a backbone-to-slave communication connection between the backbone emergency communication line system and the slave control unit emergency communication line, thereby enabling transfer of the output control data from the master emergency communication unit via the backbone emergency communication line system, the backbone-to-slave communication connection and the slave control unit emergency communication line system towards the slave control unit.

Hence, the slave emergency communication unit (e.g. in a simple switching operation triggered by the detection of an emergency situation) may simply provide a bypass connection between the slave control unit emergency communication line and the backbone emergency communication line system. In such a case, during emergency operation, at least part of the control messages exchanged between the master control unit and the slave control unit do not undergo any modification in the slave emergency communication unit, but are simply routed through the slave emergency communication unit.

It will be appreciated that the driver's input into the control system may be provided via any desired and suitable human interface device, such as a driver's console, providing one or more control input elements to be operated by the driver. With certain preferred embodiments of the control arrangement according to the invention, at least one of the first control device and the second control device comprises a driver's console configured to assume, in an activated state during the normal operational state of the train set, a role of a master console generating control input for the at least one controlled component.

It will be appreciated that, with certain embodiments of the invention, connection between the master driver's console and the master emergency communication unit may exclusively provided via the master control unit. Preferably, however, the emergency communication unit, at least in the emergency state, is directly (i.e. without any detour via the master control unit) connected to the master console via at least one master console emergency communication line to receive the control input. The emergency communication unit then is configured to forward, in the emergency state, at least part of the control input (received via the master console emergency communication line) for the at least one controlled component via the backbone emergency communication line system. Such a solution has the advantage that, even in case of a failure of the master control device, control of the active devices may still be maintained to a sufficient extent.

It will again be appreciated that at least part of this master console emergency communication line may be provided by the data bus system. Preferably, however, the master console emergency communication line is a communication line separate and independent from the data bus system. This has the advantage that a fault in the data bus system does not affect emergency communication between the master driver's console and the master emergency communication unit.

With certain embodiments of the invention, the master console emergency communication line is connected to a control input unit of the master console, the control input unit being configured to generate the control input for the at least one controlled component. Preferably, the emergency communication unit is configured to receive first control input signals via the master console emergency communication line from the control input unit. Furthermore, the emergency communication unit is configured to convert the first control input signals into second control input signals and to forward the second control input signals towards the controlled component via the backbone emergency communication line system. Hence, even in case of failure of the master control device, at least a limited set of control functions remains available to the driver. Preferably, of course, this set of control functions comprises safety relevant and/or vital functions of the train set.

It will be appreciated that, with certain preferred embodiments of the invention, only one such emergency communication unit may be assigned to the respective control device. Preferably, however, further (safety enhancing) redundancy is introduced into the system if the at least one emergency communication arrangement comprises a third emergency communication unit associated to the first emergency communication unit and/or a fourth emergency communication unit associated to the second emergency communication unit.

In addition or as an alternative, the at least one emergency communication unit comprises a first communication interface and a second communication interface, the first communication interface being configured to be connected to a control unit of at least one of the first control device and the second control device, the second communication interface being configured to be connected to the backbone emergency communication line system. To enhance overall safety of the system, the at least one emergency communication unit has a malfunction safety mode activated in case of a malfunction of the emergency communication unit, wherein the first communication interface and the second communication interface, in the malfunction safety mode, are connected to form a signal bypass.

Hence, in case of a failure or malfunction of the emergency communication unit, the emergency communication unit, automatically or upon corresponding operation by the driver, switches into this malfunction safety mode. The emergency communication unit then forms a simple signal line connecting the associated control device and the backbone emergency communication line system, thereby allowing emergency communication even in case of malfunction of the emergency communication unit.

It will be appreciated that any desired type of communication system may be selected for the communication channels as outlined above. Preferably, at least one of the data bus system and the emergency communication channel comprises at least one data bus line, in particular a serial data bus line, the data bus line, in particular, being of the RS485 type, the CAN type, or the Ethernet type. In addition or as an alternative, at least a part of the data bus system is of the multifunction vehicle bus (MVB) type.

Furthermore, it will be appreciated that the active control component may be of any desired type providing any desired function in the train set. Preferably, the active control component of the component providing vital and/or safety relevant functions of the train set. Hence, preferably, the at least one controlled component is a component, in particular, a local control unit, of at least one of a traction system of the train set and a braking system of the train set.

Although the present invention may basically be used for train sets of any desired number of vehicles, it proves to be particularly useful in train sets comprising three or more vehicles. Hence, with certain preferred embodiments of the invention, the train set comprises at least one intermediate vehicle located between the first vehicle and the second vehicle. The data bus system then comprises a master data bus section associated to the master control device, a slave data bus section associated to the slave control device and an intermediate data bus section associated to the intermediate vehicle. The intermediate data bus section is connected to the master data bus section via an intermediate data bus unit, the intermediate data bus unit being at least one of a data bus coupler unit and a data bus repeater unit. The emergency communication arrangement in this case is configured to deactivate, in the emergency state, the intermediate data bus unit.

Such a solution has the advantage that faulty or contradictory control messages or signals, which may still be present in cases where communication from the master control device over the data bus system is not fully interrupted (but only heavily disturbed, for example), are simply cut off at these intermediate points formed by the respective intermediate data bus unit. Hence, proper control occurring exclusively over the emergency communication path is guaranteed.

The present invention further relates to a train set with a control arrangement according to of the present invention.

The present invention further relates to a method for controlling at least one controlled component of a train set using a first control device associated to a first driver's stand of a first vehicle of the train set, a second control device associated to a second driver's stand of a second vehicle of the train set, a data bus system connecting the first control device and the second control device to the controlled component and an emergency communication arrangement. In this method the first control device assumes, in an activated state of the first driver's stand during a normal operational state of the train set, a role as a master control device controlling the at least one controlled component via the data bus system, whereas the second control device assumes, in an activated state of the second driver's stand during the normal operational state of the train set, the role as the master control device controlling the at least one controlled component via the data bus system. In an emergency state with interrupted communication between the master control device and the at least one controlled component via the data bus system, an emergency communication arrangement provides an emergency communication channel separate from the data bus system between the master control device and a slave control device, the slave control device being the one of the first control device and the second control device not forming the master control device. The master control device, in the emergency state, controlling the at least one controlled component via the emergency communication channel, the slave control device and a non-interrupted part of the data bus system between the slave control device and the at least one controlled component. With this method the advantages and variants as outlined above in the context of the control arrangement according to the invention may be achieved to the same extent. Hence, reference is merely made here to the explanations given above in this context.

Further embodiments of the present invention will become apparent from the dependent claims and the following description of preferred embodiments which refers to the appended figures.

### BRIEF DESCRIPTION OF THE DRAWINGS

- Figure 1: a schematic view of a preferred embodiment of a train set according to the invention with a preferred embodiment of a control arrangement for the train set according to the invention;
- Figure 2: a flowchart of a preferred embodiment of a method according to the invention, which can be used in the train set of Figure 1.

### DETAILED DESCRIPTION OF THE INVENTION

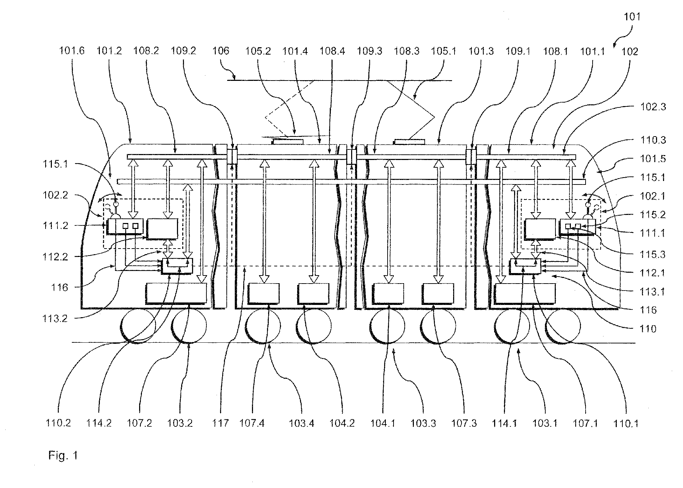

Figure 1 shows a schematic view of a preferred embodiment of a train set according to the present invention in the form of a so-called Electric Multiple Unit (EMU) train set 101 with a preferred exemplary embodiment of a control arrangement 102 according to the invention. The train set 101 comprises a plurality of vehicles 101.1 to 101.4 which are coupled to one another and supported on a series of bogies 103.1 to 103.4, with the bogies 103.2 and 103.3 being driven bogies whereas bogies 103.1 and 103.4 being non-driven bogies.

A traction system of the train set 101 comprises a plurality of active traction components 104.1 to 104.2 associated with each driven bogie 103.2, 103.3. The respective active traction component 104.1, 104.2 is controlled by the control arrangement 102 as will be explained in greater detail in the following.

The driven bogies 103.2, 103.3 are divided into two bogie groups, to which is associated a respective energy supply device of the active traction components 104.1 to 104.2. Thus, a first energy supply device supplies the traction devices of bogie 103.2, while a second energy supply device supplies the traction devices of bogie 103.3. For this purpose, the energy supply devices are in each case connected to a current collector 105.1 or 105.2, of which, in normal operation (depending on the primary direction of travel) only one is brought into contact with an overhead line 106.

A braking system of the train set 101 comprises a plurality of active braking components 107.1 to 107.4 for braking the associated bogies 103.1 to 103.4. The active braking components are controlled by the control arrangement 102 as will be explained in greater detail in the following.

It is obvious here that, with other variants of the invention, a division into more than two bogie groups may be provided, to which a respective separate energy supply device and/or a separate braking system is then associated. It is also obvious that, with other variants of the invention, it can also be provided that a separately controlled energy supply device and/or a separately controlled braking system can be provided for each bogie.

The control arrangement 102 comprises a first control device 102.1 associated to a first driver's stand 101.5 of a first end vehicle 101.1 of the train set 101 as well as a second control device 102.2 associated to a second driver's stand 101.6 of a second end vehicle 101.2 of the train set 102. The control arrangement 102 further comprises a data bus system 102.3 connecting the first control device 102.1 and the second control device 102.2 to the active traction and braking components 104.1, 104.2 and 107.1 to 107.4 of the train set 101.

It will be appreciated that the respective control device 102.1 and 102.2, via the data bus system 102.3, may also be connected to further active components of the train set 101. Such active components may be of any desired type, the operation of which may be actively controlled by the driver or automatically controlled by the vehicle control system. For example, they may be components of vehicle doors, an air-conditioning system, a lighting system, a passenger information system, etc.

The data bus system 102.3, in the present example, is formed by the vehicle bus systems 108.1 to 108.4 of the individual vehicles 101.1 to 101.4. Each of the vehicle bus systems 108.1 to 108.4, in the present example, is formed by a serial data bus system in the form of a so-called Multifunctional Vehicle Bus (MVB).

The vehicle bus systems 108.1 to 108.4, at the interface between the individual vehicles 101.1 to 101.4, are coupled via intermediate units in the form of a bus coupler 109.1 (between end vehicle 101.1 and the first intermediate vehicle 101.3), a bus coupler 109.2 (between end vehicle 101.2 and the second intermediate vehicle 101.4) and a bus repeater 101.3 (between the two intermediate vehicles 101.3 and 101.4). Hence, the data bus system 102.3 is formed by a data bus network of the vehicle bus systems 108.1 to 108.4.

It will be appreciated that, with other embodiments of the invention, any other type of data bus system may be used. For example, a superordinate data bus system, such as a so-called Wired Train Bus (WTB) may be provided connecting the individual vehicle bus systems (MVB). Furthermore, of course, any other type of data bus system may be used.

It will be further appreciated that, with certain embodiments of the invention, the data bus system 102.3 in itself may have a redundant outlay to enhance safety of the system. For example, the data bus system 102.3 may comprise at least two redundantly arranged data bus lines.

During normal operation of the train set 101, with the driver having activated and using the first driver's stand 101.5, the first control device 102.1 assumes a role as a master control device controlling the active components 104.1, 104.2 and 107.1 to 107.4 of the train set 101 via the data bus system 102. Otherwise, if the driver has activated and uses the second driver's stand 101.6, the second control device 102.2 assumes this role as the master control device controlling the active components 104.1, 104.2 and 107.1 to 107.4 of the train set 101 via the data bus system.

In the following, for illustrative purposes, a situation will be described where the driver has activated and uses the first driver's stand 101.5, such that the first control device 102.1 assumes the role of the master control device.

During operation of the vehicle, certain incidents, such as a malfunction in the components of the data bus system 102.3, but also hazardous incidents such as fire, mechanical damage or other damage, may lead to at least partial interruption of the communication path provided by the data bus system 102.3. Such a situation may deprive the driver of the ability to control vital functions of the train set 101, such as traction and braking of the train set 101, since communication between the master control device 102.1 and a sufficient number of the active components 104.1, 104.2 and 107.1 to 107.4 may be lost to execute these vital functions.

To avoid such a potentially hazardous situation, according to the present invention, there is provided an emergency communication arrangement 110 providing emergency communication functionality in such a case of emergency with interruption of the control path via the data bus system 102.3.

In the present example, the emergency communication arrangement 110 comprises a first emergency communication unit 110.1 in the form of a first so-called driver desk emergency board (DDEB) associated and connected to the first control device 102.1, a second emergency communication unit 110.2 in the form of a second driver desk emergency board (DDEB) associated and connected to the second control device 102.2 as well as a backbone emergency communication line system 110.3, which is (logically and/or physically) separated from the data bus system 102.3 and connects the two emergency communication units 110.1 and 110.2.

Since, for the purpose of the present explanations, the first control device 102.1 forms the master control device, the associated emergency communication unit 110.1 also assumes the role of a master emergency communication unit, while the other, second control device 102.2 assumes the role of a slave control device and the associated second emergency communication unit 110.2 assumes the role of a slave emergency communication unit as will be explained in greater detail below. Of course, these roles are mutually exchanged in case the other, second driver's stand 101.6 is activated and used by the driver.

In case of emergency with interrupted communication (i.e. communication that is at least that largely disturbed or degraded that proper control of the active components cannot be executed any more) between the master control device 102.1 and a critical number of the active components 104.1, 104.2, 107.1 to 107.4, the emergency communication arrangement 110 is activated to provide an emergency communication channel between the master control device 102.1 and at least a part of these controlled active components 104.1, 104.2, 107.1 to 107.4 sufficient to execute the respective operative function provided by these components on the train set 101.

It will be appreciated that, in the sense of the present invention, the critical number of controlled components is understood to be the minimum number of these controlled active components 104.1, 104.2 and 107.1 to 107.4 necessary to provide a minimum level (or emergency level) of the respective function (e.g. traction or braking, etc.) necessary for safe operation of the train set 101.

Hence, for example, in case of an interruption of this communication between the master control device 102.1 and the active components 104.1, 104.2, 107.1 to 107.4 at the level of the first bus coupler 109.1, the driver at the activated driver's stand 101.5 would lose complete control over the traction system of the train set 101 and, if at all, would only have control over the part of the braking system represented by the braking unit 107.1 (which, typically, would even not be sufficient to provide proper emergency braking operation of the train set 101).

According to the present invention, an emergency communication channel between the master control device 102.1 and the controlled active components 104.1, 104.2, 107.2 to 107.4 is established via the master emergency communication unit (DDEB) 110.1, the backbone emergency communication line system 110.3, the slave emergency communication unit (DDEB) 110.2, the slave control device 102.2 and the non-interrupted part of the data bus system 102.3 located between the slave control device 102.2 and the controlled active components 104.1, 104.2 and 107.2 to 107.4.

Hence, emergency control is maintained over a number of these controlled active components 104.1, 104.2, 107.1 to 107.4 which is sufficient to execute the respective function of these components on the train set 101 to an acceptable degree under such emergency circumstances.

In the present example, the emergency communication arrangement 110 provides a simple bypass of the interrupted part of the data bus system 102.3 via the emergency communication channel, the slave control device 102.2 and the intact part of the data bus system 102.3 (between the slave control device 102.2 and the respective controlled component 104.1, 104.2, 107.2 to 107.4) without the necessity of providing a direct connection between the emergency communication channel and the respective controlled active components 104.1, 104.2, 107.2 to 107.4.

It will be appreciated that the emergency communication channel between the master control device 102.1 and the slave control device 102.2 may, in principle, be provided by any suitable means allowing transmission of appropriate control signals, data or messages from the master control device 102.1 to the slave control device 102.2. In particular, a specific emergency communication protocol may be implemented within the master control device 102.1 and the slave control device 102.2, eventually comprising only a limited set of predefined instructions and responses, respectively, such that only specific control functions (in particular, vital and/or safety relevant control functions, such as emergency traction and emergency braking) may still be executed in such an emergency situation.

Accordingly, any desired and suitable outlay may be selected for the backbone emergency communication line system 110.3. In the present example, a serial emergency data bus system is selected as the backbone emergency communication line system 110.3. Such a solution using a data bus system has the advantage that, if at all, the control messages exchanged between the control devices 102.1 and 102.2 do only have to be modified to a limited extent compared to normal operation.

The two control devices 102.1 and 102.2 may be of identical design having any suitable configuration generating suitable control data for the active components 104.1, 104.2, 107.1 to 107.4. In the present example, each control device 102.1, 102.2 comprises a driver's console 111.1, 111.2 and a control unit 112.1, 112.2 connected to the associated driver's console 111.1, 111.2 via the data bus system 102.3. The control unit 112.1 of the master control device 102.1 assumes the role of a master control unit, while the control unit 112.2 of the slave control device 102.2 assumes the role of the slave control unit.

It will be appreciated that, with certain embodiments of the invention, at least part of the communication path between the master control unit 112.1 and the master emergency communication unit 110.1 as well as at least part of the communication path between the slave control unit 112.2 and the slave emergency communication unit 110.2 may be provided by parts of the data bus system 102.3;

In the present example, however, the master emergency communication unit 110.1, at least in the emergency state of the train set 101, is connected to the master control unit 112.1 via a master control unit emergency communication line 113.1 separate from the data bus system 102.3. Similar applies to the slave emergency communication unit 110.2 which, at least in the emergency state of the train set 101, is connected to the slave control unit 112.2 via a slave control unit emergency communication line 113.2 separate from the data bus system 102.3. Such a design has the advantage that a failure in the data bus system does not affect communication between the respective control unit 112.1, 112.2 and the respective emergency communication unit 110.1, 110.2.

Again, the respective control unit emergency communication line 113.1, 113.2 may be of any desired and suitable design. Preferably, the respective control unit emergency communication line 113.1, 113.2 is a serial emergency data bus line. Again, this has the advantages outlined above with respect to the type and outlay of the control messages exchanged during emergency operations.

It will be appreciated that the role and functionality of the respective emergency communication unit 110.1, 110.2 may vary in different embodiments of the present invention, as will be explained in the following.

In the present example, the respective master emergency communication unit, here master emergency communication unit 102.1, initiates the emergency operation of the control arrangement 102, thereby activating the emergency communication channel, in response to detection of an interruption of the data bus system and/or in response to a corresponding input of the driver.

In this case, the master emergency communication unit 110.1 receives input control data ICD via the master control unit emergency communication line 113.1 from the master control unit 112.1. The emergency communication unit 110.1 further forwards output control data OCD1 derived from the input control data ICD towards the controlled active components 104.1, 104.2, 107.2 to 107.4 via the backbone emergency communication line system 110.3.

In the present example, the master emergency communication unit 110.1 simply routes through the input control data ICD without modifying these data. Hence, the output control data OCD1 simply correspond to the input control data ICD (i.e. OCD1 = ICD). To achieve this routing function, the master emergency communication unit 110.1, in the emergency state, provides a master-to-backbone communication connection 114.1 between a first communication interface connected to the master control unit emergency communication line 113.1 (and, hence, to the master control unit 112.1) and a second communication interface connected to the backbone emergency communication line system 110.3.

Such a solution enables simple transfer of the input control data ICD from the master control unit 112.1 via the master control unit emergency communication line 113.1, the master-to-backbone communication connection 114.1 and the backbone emergency communication line system 110.3 towards the respective controlled active components 104.1, 104.2, 107.2 to 107.4.

Hence, the master emergency communication unit 110.1 (e.g. in a simple switching operation triggered by the detection of an emergency situation) may provide a simple bypass connection between the master control unit emergency communication line 113.1 and the backbone emergency communication line system 110.3. In such a case, during emergency operation, the control messages exchanged between the master control unit 112.1 and the slave control unit 112.2 do not have to undergo any modification in the master emergency communication unit 110.1, but are simply routed through the master emergency communication unit 110.1.

Similar applies to the slave emergency communication unit 110.2. In the present example, the slave emergency communication unit 110.2 receives the output control data OCD1 via the backbone emergency communication line system 110.3 from the master emergency communication unit 110.1. The slave emergency communication unit 110.2, in response to receipt of the output control data OCD1, provides further output control data OCD1 to the slave control unit 112.2 of the slave control device 102.2 via a slave control unit emergency communication line 113.2 connecting the slave emergency communication unit 110.2 and the slave control unit 112.2

Again, at least part of this slave control unit emergency communication line 113.2 may be provided by parts of the data bus system 102.3. In the present example, however, the slave control unit emergency communication line 113.2 also is a communication line separate and independent from the data bus system 102.3. This has the advantage that a fault in the data bus system 102.3 does not affect emergency communication between the slave control unit 112.2 and the slave emergency communication unit 110.2.

Basically, the slave emergency communication unit 110.2 may provide the same functionality as the master emergency communication unit 110.1. Hence, in the present example, the slave emergency communication unit, in the emergency state, provides a backbone-to-slave communication connection 114.2 between a first communication interface connected to the slave control unit emergency communication line 113.2 (and, hence, to the slave control unit 112.2) and a second communication interface connected to the backbone emergency communication line system 110.3, thereby enabling simple routing of the output control data OCD1 from the master emergency communication unit 110.1 via the backbone emergency communication line system 110.3, the backbone-to-slave communication connection 114.2 and the slave control unit emergency communication line 113.2 towards the slave control unit 112.2.

Hence, in the present example, the slave emergency communication unit 110.2 (e.g. in a simple switching operation triggered by the detection of an emergency situation) may also simply provide a bypass connection between the slave control unit emergency communication line 113.2 and the backbone emergency communication line system 110.3. In such a case, during emergency operation, the control messages exchanged between the master control unit 112.1 and the slave control unit do not undergo any modification in the slave emergency communication unit, but are simply routed through the slave emergency communication unit 110.2. Consequently, the further output control data OCD2 provided by the slave emergency communication unit 110.2 to the slave control unit 112.2 correspond to the output control data OCD1 received from the master emergency communication unit 110.1 (i.e. OCD1 = OCD2). To sum it up, the master emergency communication unit 110.1 and the slave emergency communication unit 110.2 simply route through the respective control messages produced by and exchanged between the control devices 102.1 and 102.2, such that these control messages remain substantially unchanged during emergency operation.

To enhance overall safety of the control arrangement 102, the respective emergency communication unit 110.1, 110.2 has a malfunction safety mode activated in case of a malfunction of the emergency communication unit 110.1, 110.2, wherein the first communication interface and the second communication interface, in the malfunction safety mode, are connected to form the respective signal bypass 114.1, 114.2.

Hence, in case of a failure or malfunction of the emergency communication unit 110.1, 110.2, the emergency communication unit 110.1, 110.2, automatically or upon corresponding operation by the driver, switches into this malfunction safety mode. The emergency communication unit 110.1, 110.2 then basically provides a simple signal line connecting the associated control device 102.1, 102.2 and the backbone emergency communication line system 102.3, thereby allowing emergency communication even in case of malfunction of the emergency communication unit.

It will be appreciated that, with certain embodiments of the invention, the master emergency communication unit 110.1 may assume an active role in the communication modifying the input control data ICD to obtain the output control data OCD1. Such a scenario may be suitable where the format and/or protocol used for the input control data is not (fully) compatible with the format and/or protocol to be used for the transmission over the backbone emergency communication line system 110.3. Furthermore, any desired and suitable filtering process may take place assuring that only control information necessary and suitable for the emergency operation is transmitted via the emergency communication path. This has the advantage that, for example, the emergency communication path may be provided with a lower bandwidth and, hence, may be kept more simple and cheaper.

Furthermore, the slave emergency communication unit 110.2 may, for example, also assume a similarly active role in modifying the output control messages (i.e. the output control data OCD1) received via the backbone emergency communication line system 110.3 into further output control data OCD2 of an appropriate format and/or protocol for forwarding these further output control data OCD2 to the slave control device 112.2.

In the present example, the backbone emergency communication line system 110.3 is arranged spatially remote from the data bus system 102.3 such that the risk of local hazardous incidents (such as fire, local mechanical or other damage, etc.) affecting both the data bus system 102.3 and the backbone emergency communication line system 110.3 is reduced as far as possible.

It will be appreciated that, as a further benefit of the present invention, the simple design of such a backbone emergency communication line system 110.3 facilitates reinforcement and strengthening, respectively, of the backbone emergency communication line system 110.3 against external influences (such as fire, heat, mechanical impact etc.). Hence, despite such additional measures enhancing robustness of the backbone emergency communication line system 110.3, a comparatively inexpensive solution may be obtained.

In the present example, the driver's input into the control system 102 is provided via a suitable human interface device in the form of the driver's console 111.1, 111.2. Each driver's console 111.1, 111.2 provides a plurality of control input units, such as the drive lever 115.1 as well as further control input units 115.2, 115.3 to be operated by the driver. Actuation of the control input units 115.1 to 115.3 of the respective master console, here master console 111.1, generates the control input for the controlled active components 104.1, 104.2, 107.1 to 107.4.

It will be appreciated that, with certain embodiments of the invention, connection between the master driver's console 111.1 and the master emergency communication unit 110.1 may exclusively provided via the master control unit.

In the present example, however, the emergency communication unit 110.1, at least in the emergency state, is directly (i.e. without any detour via the master control unit) connected to the master console 111.1 via a plurality master console emergency communication lines 116 to receive the control input in case of a failure of the connection between the master console 111.1 and the master control unit 112.1 via the data bus system 102.3. More precisely, each master console emergency communication line 116 connects the respective control input element 115.1 to 115.3 to the master emergency communication unit 110.1.

The master emergency communication unit 110.1, in turn, is configured to forward, in the emergency state, at least part of the control input received via the master console emergency communication lines 116 for the at least one controlled component via the backbone emergency communication line system 110.3. Such a solution has the advantage that, even in case of a failure of the master control device 112.1 or the communication between the master control device 112.1 and the master console 111.1, control of the active components 104.1, 104.2, 107.2 to 107.4 may still be maintained.

It will again be appreciated that at least part of the respective master console emergency communication line 116 may be provided by a part of the data bus system 102.3. In the present example, however, each master console emergency communication line 116 is a communication line separate and independent from the data bus system 102.3. This has the advantage that a fault in the data bus system does not affect emergency communication between the master driver's console 111.1 and the master emergency communication unit 110.1.

In the present example, each console emergency communication line 116 is connected the respective control input unit 115.1 to 115.3 of the respective console 111.1, 111.2. Each control input unit 115.1 to 115.3 generates suitable control input for one or more of the controlled active components 104.1, 104.2 and 107.1 to 107.4.

The respective emergency communication unit 110.1, 110.2 is configured to receive control input signals CIS via the respective console emergency communication line 116 from the respective control input unit 115.1 to 115.3. Furthermore, the emergency communication unit 110.1, 110.2 converts the control input signals CIS into second control input messages CIM and forwards these control input messages CIM towards the controlled active components 104.1, 104.2 and 107.1 to 107.4 via the backbone emergency communication line system 110.3. Hence, even in case of failure of the master control device, at least a limited set of control functions remains available to the driver, allowing safe emergency operation of the train set 101.

In the present example, the emergency communication arrangement 110 is configured to deactivate, in the emergency state and depending on the type and location of the interruption or disturbance, at least one of the intermediate data bus units 109.1 to 109.3 via control lines 117. Hence, for example, if the communication disturbance is located between the first data bus coupler 109.1 and the master control device 102.1, the master emergency communication device 110.1 may simply shut down the first data bus coupler 109.1 via the control lines 117. Moreover, in case the disturbance is located between the first data bus coupler 109.1 and data bus repeater 109.3, the master emergency communication device 110.1 may simply shut down the first data bus coupler 109.1 and the data bus repeater 109.3 via the control lines 117. Hence, faulty sections of the data bus system 102.3 may simply be cut out of the communication path to keep the remaining intact sections of the data bus system undisturbed and, hence, operative to the highest possible extent.

Such a solution has the advantage that faulty or contradictory control messages or signals, which may still be present in cases where communication from the master control device 102.1 over the data bus system 102.3 is not fully interrupted (but only heavily disturbed, for example), may simply be cut off at these intermediate points formed by the respective intermediate data bus unit 109.1 to 109.3. Hence, proper control occurring exclusively over the emergency communication path in such a faulty section of the train set 101 is guaranteed.

It will be appreciated that, basically, one single emergency communication unit 110.1 per train set 101 would be sufficient. However, if desired, such a solution would require that the console emergency communication lines 116 from both consoles 111.1 and 111.2 reach throughout train set towards the single emergency communication unit 110.1.

It will be further appreciated that, with certain preferred embodiments of the invention, only one such emergency communication unit may be assigned to the respective control device. Preferably, however, further (safety enhancing) redundancy is introduced into the system if the at least one emergency communication arrangement comprises a third emergency communication unit (not shown) identical to the first emergency communication unit 110.1 and associated to the first emergency communication unit 110.1. Furthermore, preferably, a fourth emergency communication unit (not shown) identical to the second emergency communication unit 110.2 and associated to the second emergency communication unit 110.2 is provided.

In the most simple case the first communication interface of the first emergency communication unit 110.1 is connected to the master control unit emergency communication line 113.1 (and, hence, to the master control unit 112.1), the second communication interface of the first emergency communication unit 110.1 is connected to the first emergency communication interface of the third emergency communication unit, while the second communication interface of the third emergency communication unit again is connected to the backbone emergency communication line system. Hence, in case of any malfunction of one of the respective first and third emergency communication, the safety mode would be actuated while the other one would still be available to provide communication control functions, if needed. A similar arrangement is selected for the combination of the second emergency communication unit 110.2 and the fourth emergency communication unit.

It will be appreciated that any desired type of communication system may be selected for the communication channels as outlined above. Preferably, at least one of the data bus system 102.3 and the emergency communication channel comprises at least one serial data bus line, the data bus line, in particular, being of the RS485 type, the CAN type, or the Ethernet type.

It will be further appreciated that the emergency communication units 110.1 and 110.2 may be of any desired design. Preferably they comprise a suitably designed, printed circuit board provided with appropriate electronic devices providing the communication functions as outlined above. Preferably, the respective emergency communication unit 110.1 and 110.2 is located in close proximity to the respective driver's stand.

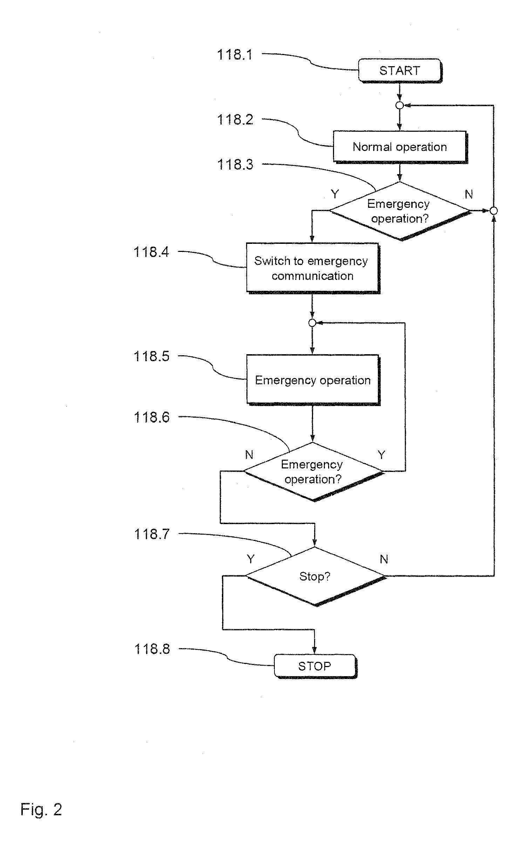

A preferred embodiment of the method for controlling at least one controlled component of a train set, which may be used in the train set 101 of Figure 1, will now be described with reference to Figure 2.

First, in an initial step 118.1, the method is started and the control arrangement 102 switches to normal operation in a step 118.2. In a regularly executed step 118.3 it is checked if emergency operation as it has been outlined above is required. If this is not the case, the method jumps back to step 118.2. Otherwise, i.e. if emergency operation is triggered by some emergency event, in a step 118.4, a switch to an emergency state with emergency communication is performed. Subsequently, in a step 118.5, emergency operation is executed as has been outlined above. In a regularly executed step 118.6 it is checked if emergency operation as it has been outlined above is still required. If this is the case, the method jumps back to step 118.5. Otherwise, i.e. if emergency operation is not required anymore, in a step 118.7, it is checked if the method is to be stopped. If this is not the case, the method jumps back to step 118.2 and, hence, back to normal operation. Otherwise, the method is ended in a step 118.8.

Although the present invention, in the foregoing, has only been described for a train set with four vehicles, it will be appreciated that it may basically be used for train sets of any desired number of vehicles (even down to only two vehicles). However, it proves to be particularly useful in train sets 101 comprising three or more vehicles.

Furthermore, although the present invention, in the foregoing, has only been described by means of an embodiment where the first control device 102.1 is the master control device and the second control device 102.2 is the slave control device, it should once again be noted that the first and second control device 102.1, 102.2 and designed such that they may simply switch their roles (depending on which driver's stand is actually activated). Hence, insofar, in particular the entire arrangement of the emergency communication arrangement 110 outlined above this symmetric with readily exchangeable roles between the components located at the two ends of the train set 101.

Although the present invention in the foregoing has only a described in the context of an Electric Multiple Unit (EMU), it will be appreciated, however, that it may also be applied to any other type of rail vehicle in order to overcome similar problems with respect to a simple solution for reducing the manufacturing effort or the effort for an upgrade of the control system.

## Claims

1. A control arrangement for a train set, comprising
- a first control device (102.1) associated to a first driver's stand (101.5) of a first vehicle of said train set (101);
- a second control device (102.2) associated to a second driver's stand (101.6) of a second vehicle of said train set (101);
- a data bus system (102.3) connecting said first control device (102.1) and said second control device (102.2) to at least one controlled component (104.1 to 104.4, 107.1, 107.2) of said train set (101);
- said first control device (102.1) being configured to assume, in an activated state of said first driver's stand (101.5) during a normal operational state of said train set (101), a role as a master control device (102.1) controlling said at least one controlled component (104.1 to 104.4, 107.1, 107.2) via said data bus system (102.3);
- said second control device (102.2) being configured to assume, in an activated state of said second driver's stand (101.6) during said normal operational state of said train set (101), said role as said master control device (102.1) controlling said at least one controlled component (104.1 to 104.4, 107.1, 107.2) via said data bus system (102.3);
**characterised in that**
- an emergency communication arrangement (110) is provided;
- said emergency communication arrangement (110) being configured to provide, in an emergency state with interrupted communication between said master control device (102.1) and said at least one controlled component (104.1 to 104.4, 107.1, 107.2) via said data bus system (102.3), an emergency communication channel separate from said data bus system (102.3) between said master control device (102.1) and a slave control device (102.2), said slave control device (102.2) being the one of said first control device (102.1) and said second control device (102.2) not forming said master control device (102.1);
- said master control device (102.1), in said emergency state, controlling said at least one controlled component (104.1 to 104.4, 107.1, 107.2) via said emergency communication channel, said slave control device (102.2) and a non-interrupted part of said data bus system (102.3) between said slave control device (102.2) and said at least one controlled component (104.1 to 104.4, 107.1, 107.2).

2. The control arrangement according to claim 1, wherein
- said emergency communication arrangement (110) comprises at least one emergency communication unit (110.1, 110.2), said emergency communication arrangement (110), in particular, comprising a master emergency communication unit (110.1) associated to said master control unit (112.1) and a slave emergency communication unit (110.2) associated to said slave control unit (112.2);
and/or
- said emergency communication arrangement (110) comprises at least one backbone emergency communication line system (110.3) separate from said data bus system (102.3) and configured to connect said master control device (102.1) and said slave control device (102.2), said backbone emergency communication line system (110.3), in particular, being an backbone emergency data bus system, in particular, a serial emergency data bus system, said backbone emergency communication line system (110.3), in particular, connecting a master emergency communication unit (110.1) and a slave emergency communication unit (110.2) of said emergency communication arrangement (110).

3. The control arrangement according to claim 2, wherein
- at least one of said first control device (102.1) and said second control device (102.2) comprises a control unit (112.1, 112.2) configured to assume, in an activated state, a role of a master control unit (112.1) controlling, during said normal operational state of said train set (101), said at least one controlled component (104.1 to 104.4, 107.1, 107.2) via said data bus system (102.3);
- said emergency communication unit (110.1, 110.2), at least in said emergency state, being connected to said master control unit (112.1) via a master control unit emergency communication line (113.1), in particular, via a master emergency data bus line, said master emergency data bus line, in particular, being a serial emergency data bus line.

4. The control arrangement according to claim 3, wherein
- said emergency communication unit (110.1, 110.2) is configured, at least in said emergency state, to receive input control data via said master control unit emergency communication line (113.1) from said master control unit (112.1)
and
- said emergency communication unit (110.1, 110.2) further being configured to forward, at least in said emergency state, output control data derived from said input control data towards said controlled component (104.1 to 104.4, 107.1, 107.2) via said backbone emergency communication line system (110.3), said emergency communication unit (110.1, 110.2), in particular, modifying said input control data to obtain said output control data;
and/or
- said emergency communication unit (110.1, 110.2) further being configured to provide, at least in said emergency state, a master-to-backbone communication connection (114.1) between said master control unit emergency communication line (113.1) and said backbone emergency communication line system (110.3), thereby enabling transfer of said input control data from said master control unit (112.1) via said master control unit emergency communication line (113.1), said master-to-backbone communication connection (114.1) and said backbone emergency communication line system (110.3) towards said controlled component (104.1 to 104.4, 107.1, 107.2).

5. The control arrangement according to claim 4, wherein
- a slave emergency communication unit (110.2) of said emergency communication arrangement (110) is configured to receive, at least in said emergency state, said output control data via said backbone emergency communication line system (110.3) from said master emergency communication unit (110.1),
- said slave emergency communication unit (110.2) being configured to forward, in response to receipt of said output control data via said backbone emergency communication line system (110.3), further output control data to a slave control unit (112.2) of said slave control device (102.2) via a slave control unit emergency communication line (113.2), said slave control unit emergency communication line (113.2) connecting said slave emergency communication unit (110.2) and said slave control unit (112.2);
- said slave emergency communication unit (110.2), in particular, modifying, said output control data to obtain said further output control data;
and/or
- said slave emergency communication unit (110.2) being configured to provide, at least in said emergency state, a backbone-to-slave communication connection (114.2) between said backbone emergency communication line system (110.3) and said slave control unit emergency communication line (113.2), thereby enabling transfer of said output control data from said master emergency communication unit (110.1) via said backbone emergency communication line system (110.3), said backbone-to-slave communication connection (114.2) and said slave control unit emergency communication line (113.2) system towards said slave control unit (112.2).

6. The control arrangement according to any one of claims 2 to 5, wherein
- at least one of said first control device (102.1) and said second control device (102.2) comprises a driver's console (111.1, 111.2) configured to assume, in an activated state during said normal operational state of said train set (101), a role of a master console (111.1) generating control input for said at least one controlled component (104.1 to 104.4, 107.1, 107.2);
- said emergency communication unit (110.1, 110.2), at least in said emergency state, being connected to said master console (111.1) via at least one master console emergency communication line (116) to receive said control input;
- said emergency communication unit (110.1, 110.2) being configured to forward, in said emergency state, at least part of said control input for said at least one controlled component (104.1 to 104.4, 107.1, 107.2) via said backbone emergency communication line system (110.3);
- said master console emergency communication line (116), in particular, being connected to a control input unit (115.1 to 115.3) of said master console (111.1), said control input unit (115.1 to 115.3) being configured to generate said control input for said at least one controlled component (104.1 to 104.4, 107.1, 107.2);
- said emergency communication unit (110.1, 110.2), in particular, being configured to receive first control input signals via said master console emergency communication line (116) from said control input unit (115.1 to 115.3), to convert said first control input signals into second control input and to forward said second control input towards said controlled component (104.1 to 104.4, 107.1, 107.2) via said backbone emergency communication line system (110.3).

7. The control arrangement according to any one of claims 2 to 6, wherein
- said at least one emergency communication arrangement (110) comprises a third emergency communication unit associated to said first emergency communication unit (110.1) and/or a fourth emergency communication unit associated to said second emergency communication unit (110.2);
and/or
- said at least one emergency communication unit (110.1, 110.2) comprises a first communication interface and a second communication interface, said first communication interface being configured to be connected to a control unit (112.1, 112.2) of at least one of said first control device (102.1) and said second control device (102.2), said second communication interface being configured to be connected to said backbone emergency communication line system (110.3); said at least one emergency communication unit (110.1, 110.2) having a malfunction safety mode activated in case of a malfunction of said emergency communication unit (110.1, 110.2), said first communication interface and said second communication interface, in said malfunction safety mode, being connected to form a signal bypass (114.1, 114.2).

8. The control arrangement according to any one of the preceding claims, wherein
- at least one of said data bus system (102.3) and said emergency communication channel comprises at least one data bus line, in particular a serial data bus line, said data bus line, in particular, being of the RS485 type, the CAN type, or the Ethernet type;
and/or
- at least a part of said data bus system (102.3) is of the multifunction vehicle bus (MVB) type
and/or
- said at least one controlled component (104.1 to 104.4, 107.1, 107.2) is a component, in particular, a local control unit, of at least one of a traction system of said train set (101) and a braking system of said train set (101).

9. The control arrangement according to any one of the preceding claims, wherein
- said train set (101) comprises at least one intermediate vehicle (101.3, 101.4) located between said first vehicle and said second vehicle;
- said data bus system (102.3) comprising a master data bus section associated to said master control device (102.1), a slave data bus section associated to said slave control device (102.2) and an intermediate data bus section associated to said intermediate vehicle (101.3, 101.4);
- said intermediate data bus section being connected to said master data bus section via an intermediate data bus unit (109.1 to 109.3), said intermediate data bus unit (109.1 to 109.3) being at least one of a data bus coupler unit and a data bus repeater unit;
- said emergency communication arrangement (110) being configured to deactivate, in said emergency state, said intermediate data bus unit (109.1 to 109.3).

10. A train set with a control arrangement (102) according to any one of the preceding claims.

11. A method for controlling at least one controlled component (104.1 to 104.4, 107.1, 107.2) of a train set (101) using a first control device (102.1) associated to a first driver's stand (101.5) of a first vehicle of said train set (101), a second control device (102.2) associated to a second driver's stand (101.6) of a second vehicle of said train set (101), a data bus system (102.3) connecting said first control device (102.1) and said second control device (102.2) to said controlled component (104.1 to 104.4, 107.1, 107.2) and an emergency communication arrangement (110), wherein
- said first control device (102.1) assumes, in an activated state of said first driver's stand (101.5) during a normal operational state of said train set (101), a role as a master control device (102.1) controlling said at least one controlled component (104.1 to 104.4, 107.1, 107.2) via said data bus system (102.3);
- said second control device (102.2) assumes, in an activated state of said second driver's stand (101.6) during said normal operational state of said train set (101), said role as said master control device (102.1) controlling said at least one controlled component (104.1 to 104.4, 107.1, 107.2) via said data bus system (102.3);
**characterised in that**
- said emergency communication arrangement (110), in an emergency state with interrupted communication between said master control device (102.1) and said at least one controlled component (104.1 to 104.4, 107.1, 107.2) via said data bus system (102.3), provides an emergency communication channel separate from said data bus system (102.3) between said master control device (102.1) and a slave control device (102.2), said slave control device (102.2) being the one of said first control device (102.1) and said second control device (102.2) not forming said master control device (102.1);
- said master control device (102.1), in said emergency state, controlling said at least one controlled component (104.1 to 104.4, 107.1, 107.2) via said emergency communication channel, said slave control device (102.2) and a non-interrupted part of said data bus system (102.3) between said slave control device (102.2) and said at least one controlled component (104.1 to 104.4, 107.1, 107.2).

12. The method according to claim 11, wherein
- communication between said master control device (102.1) and said at least one controlled component (104.1 to 104.4, 107.1, 107.2) is provided via at least one emergency communication unit, in particular, via a master emergency communication unit (110.1) associated to said master control unit (112.1) and a slave emergency communication unit (110.2) associated to said slave control unit (112.2);
and/or
- said master control device (102.1) and said slave control device (102.2) are connected via at least one backbone emergency communication line system (110.3) separate from said data bus system (102.3), said backbone emergency communication line system (110.3), in particular, being an backbone emergency data bus system, in particular, a serial emergency data bus system, said backbone emergency communication line system (110.3), in particular, connecting a first emergency communication unit (110.1) and a second emergency communication unit (110.2) of said emergency communication arrangement (110).

13. The method according to claim 12, wherein
- at least one of said first control device (102.1) and said second control device (102.2) comprises a control unit (112.1, 112.2) configured to assume, in an activated state, a role of a master control unit (112.1) controlling, during said normal operational state of said train set (101), said at least one controlled component (104.1 to 104.4, 107.1, 107.2) via said data bus system (102.3);
- said emergency communication unit (110.1, 110.2), at least in said emergency state, being connected to said master control unit (112.1) via a master control unit emergency communication line (113.1), in particular, via a master emergency data bus line, said master emergency data bus line, in particular, being a serial emergency data bus line, wherein
- said emergency communication unit (110.1, 110.2), at least in said emergency state, in particular receives input control data via said master control unit emergency communication line (113.1) from said control unit (112.1, 112.2)
and
- said emergency communication unit (110.1, 110.2), in particular, further forwards, at least in said emergency state, output control data derived from said input control data towards said controlled component (104.1 to 104.4, 107.1, 107.2) via said backbone emergency communication line system (110.3), said emergency communication unit (110.1, 110.2), in particular, modifying said input control data to obtain said output control data;
and/or
- said emergency communication unit (110.1, 110.2), in particular, further provides, at least in said emergency state, a master-to-backbone communication connection between said master control unit emergency communication line (113.1) and said backbone emergency communication line system (110.3), thereby enabling transfer of said input control data from said master control unit (112.1) via said master control unit emergency communication line (113.1), said master-to-backbone communication connection and said backbone emergency communication line system (110.3) towards said controlled component (104.1 to 104.4, 107.1, 107.2).

14. The method according to claim 13, wherein
- said second emergency communication, at least in said emergency state, receives said output control data via said backbone emergency communication line system (110.3) from said first emergency communication unit (110.1),
- said second emergency communication unit (110.2) forwards, in response to receipt of said output control data via said backbone emergency communication line system (110.3), further output control data to said second control unit forming a slave control unit (112.2) via a slave control unit emergency communication line (113.2), said slave control unit emergency communication line (113.2) connecting said second emergency communication unit (110.2) and said slave control unit (112.2); wherein
- said second emergency communication unit (110.2), in particular, modifyies said
output control data to obtain said further output control data; and/or
- said second emergency communication unit (110.2), in particular, at least in said emergency state, provides a backbone-to-slave communication connection between said backbone emergency communication line system (110.3) and said slave control unit emergency communication line (113.2), thereby enabling transfer of said output control data from said first emergency communication unit (110.1) via said emergency communication line system, said backbone-to-slave communication connection and said slave control unit emergency communication line (113.2) system towards said second control unit.

15. The method according to any one of claims 12 to 14, wherein
- at least one of said first control device (102.1) and said second control device (102.2) comprises a driver's console assuming, in an activated state during said normal operational state of said train set (101), a role of a master console (111.1) generating control input for said at least one controlled component (104.1 to 104.4, 107.1, 107.2);
- said emergency communication unit (110.1, 110.2), at least in said emergency state, being connected to said master console (111.1) via at least one master console emergency communication line (116) to receive said control input;
- said emergency communication unit (110.1, 110.2) forwarding, in said emergency state, at least part of said control input for said at least one controlled component (104.1 to 104.4, 107.1, 107.2) via said backbone emergency communication line system (110.3);
- said master console emergency communication line (116), in particular, being connected to a control input unit (115.1 to 115.3) of said master console (111.1), said control input unit (115.1 to 115.3) generating said control input for said at least one controlled component (104.1 to 104.4, 107.1, 107.2);
- said emergency communication unit (110.1, 110.2), in particular, receiving first control input signals via said second emergency communication line from said control input unit (115.1 to 115.3), converting said first control input signals into second control input signals and forwarding said second control input signals towards said controlled component (104.1 to 104.4, 107.1, 107.2) via said backbone emergency communication line system (110.3).

16. The method according to any one of claims 12 to 15, wherein
- said at least one emergency communication arrangement (110) comprises a third emergency communication unit associated to said first emergency communication unit (110.1) and/or a fourth emergency communication unit associated to said second emergency communication unit (110.2);
and/or
- said at least one emergency communication unit (110.1, 110.2) comprises a first communication interface and a second communication interface, said first communication interface being connected to a control unit (112.1, 112.2) of at least one of said first control device (102.1) and said second control device (102.2), said second communication interface being connected to said backbone emergency communication line system (110.3); wherein, in case of a malfunction of said emergency communication unit (110.1, 110.2), a malfunction safety mode is activated, said first communication interface and said second communication interface, in said malfunction safety mode, being connected to form a signal bypass.

## Patentansprüche

1. Steueranordnung für einen Zug, umfassend:
- eine erste Steuervorrichtung (102.1), die einem ersten Führerstand (101.5) eines ersten Fahrzeugs des Zugs (101) zugeordnet ist,
- eine zweite Steuervorrichtung (102.2), die einem zweiten Führerstand (101.6) eines zweiten Fahrzeugs des Zugs (101) zugeordnet ist,
- ein Datenbussystem (102.3), das die erste Steuervorrichtung (102.1) und die zweite Steuervorrichtung (102.2) mit wenigstens einer gesteuerten Komponente (104.1 bis 104.4, 107.1, 107.2) des Zugs (101) verbindet,
- wobei die erste Steuervorrichtung (102.1) dazu konfiguriert ist, in einem aktivierten Zustand des ersten Führerstands (101.5) während eines Normalbetriebszustands des Zugs (101) eine Rolle als Master-Steuervorrichtung (102.1) zu übernehmen, welche die wenigstens eine gesteuerte Komponente (104.1 bis 104.4, 107.1, 107.2) über das Datenbussystem (102.3) steuert,
- wobei die zweite Steuervorrichtung (102.2) dazu konfiguriert ist, in einem aktivierten Zustand des zweiten Führerstands (101.6) während des Normalbetriebszustands des Zugs (101) die Rolle als die Master-Steuervorrichtung (102.1) zu übernehmen, welche die wenigstens eine gesteuerte Komponente (104.1 bis 104.4, 107.1, 107.2) über das Datenbussystem (102.3) steuert, **dadurch gekennzeichnet, dass**
- eine Notkommunikationsanordnung (110) vorgesehen ist, wobei
- die Notkommunikationsanordnung (110) dazu konfiguriert ist, in einem Notfallzustand mit unterbrochener Kommunikation zwischen der Master-Steuervorrichtung (102.1) und der wenigstens einen gesteuerten Komponente (104.1 bis 104.4, 107.1, 107.2) über das Datenbussystem (102.3) einen von dem Datenbussystem (102.3) separaten Notkommunikationskanal zwischen der Master-Steuervorrichtung (102.1) und einer Slave-Steuervorrichtung (102.2) bereitzustellen, wobei die Slave-Steuervorrichtung (102.2) diejenige von der ersten Steuervorrichtung (102.1) und der zweiten Steuervorrichtung (102.2) ist, die nicht die Master-Steuervorrichtung (102.1) bildet, wobei
- die Master-Steuervorrichtung (102.1) in dem Notfallzustand die wenigstens eine gesteuerte Komponente (104.1 bis 104.4, 107.1, 107.2) über den Notkommunikationskanal, die Slave-Steuervorrichtung (102.2) und einen nicht unterbrochenen Teil des Datenbussystems (102.3) zwischen der Slave-Steuervorrichtung (102.2) und der wenigstens einen gesteuerten Komponente (104.1 bis 104.4, 107.1, 107.2) steuert.

2. Steueranordnung nach Anspruch 1, wobei
- die Notkommunikationsanordnung (110) wenigstens eine Notkommunikationseinheit (110.1, 110.2) aufweist, wobei die Notkommunikationsanordnung (110) insbesondere eine Master-Notkommunikationseinheit (110.1), die der Master-Steuereinheit (112.1) zugeordnet ist, und eine Slave-Notkommunikationseinheit (110.2), die der Slave-Steuereinheit (112.2) zugeordnet ist, aufweist,
und/oder
- die Notkommunikationsanordnung (110) wenigstens ein Backbone-Notkommunikationsleitungssystem (110.3) aufweist, das von dem Datenbussystem (102.3) getrennt und zum Verbinden der Master-Steuervorrichtung (102.1) und der Slave-Steuervorrichtung (102.2) konfiguriert ist, wobei das Backbone-Notkommunikationsleitungssystem (110.3) insbesondere ein Backbone-Notfall-Datenbussystem ist, insbesondere ein serielles Notfall-Datenbussystem ist, wobei das Backbone-Notkommunikationsleitungssystem (110.3) insbesondere eine Master-Notkommunikationseinheit (110.1) und eine Slave-Notkommunikationseinheit (110.2) der Notkommunikationsanordnung (110) verbindet.

3. Steueranordnung nach Anspruch 2, wobei
- die erste Steuervorrichtung (102.1) und/oder die zweite Steuervorrichtung (102.2) eine Steuereinheit (112.1, 112.2) aufweist, die dazu konfiguriert ist, in einem aktivierten Zustand eine Rolle einer Master-Steuereinheit (112.1) zu übernehmen, die während des normalen Betriebszustands des Zugs (101) die wenigstens eine gesteuerte Komponente (104.1 bis 104.4, 107.1, 107.2) über das Datenbussystem (102.3) steuert, wobei
- die Notkommunikationseinheit (110.1, 110.2) wenigstens in dem Notfallzustand über eine Master -Steuereinheit-Notkommunikationsleitung (113.1), insbesondere über eine Master-Notfall-Datenbusleitung, mit der Master-Steuereinheit (112.1) verbunden ist, wobei die Master-Notfall-Datenbusleitung insbesondere eine serielle Notfall-Datenbusleitung ist.

4. Steueranordnung nach Anspruch 3, wobei
- die Notkommunikationseinheit (110.1, 110.2) dazu konfiguriert ist, wenigstens in dem Notfallzustand über die Master-Steuereinheit-Notkommunikationsleitung (113.1) Eingangssteuerdaten von der Master-Steuereinheit (112.1) zu erhalten,
und
- die Notkommunikationseinheit (110.1, 110.2) ferner dazu konfiguriert ist, wenigstens in dem Notfallzustand Ausgangssteuerdaten, die von den Eingangssteuerdaten abgeleitet sind, über das Backbone-Notkommunikationsleitungssystem (110.3) zu der gesteuerten Komponente (104.1 bis 104.4, 107.1, 107.2) weiterzuleiten, wobei die Notkommunikationseinheit (110.1, 110.2) insbesondere die Eingangssteuerdaten modifiziert, um die Ausgangssteuerdaten zu erhalten,
und/oder
- die Notkommunikationseinheit (110.1, 110.2) ferner dazu konfiguriert ist, wenigstens in dem Notfallzustand eine Master-zu-Backbone-Kommunikationsverbindung (114.1) zwischen der Master-Steuereinheit-Notkommunikationsleitung (113.1) und dem Backbone-Notkommunikationsleitungssystem (110.3) bereitzustellen, wodurch der Transfer der Eingangssteuerdaten von der Master-Steuereinheit (112.1) über die Master-Steuereinheit-Notkommunikationsleitung (113.1), die Master-zu-Backbone-Notkommunikationsverbindung (114.1) und das Backbone-Notkommunikationsleitungssystem (110.3) zu der gesteuerten Komponente (104.1 bis 104.4, 107.1, 107.2) hin ermöglicht wird.

5. Steueranordnung nach Anspruch 4, wobei
- eine Slave-Notkommunikationseinheit (110.2) der Notkommunikationsanordnung (110) dazu konfiguriert ist, wenigstens in dem Notfallzustand die Ausgangssteuerdaten über das Backbone-Notkommunikationsleitungssystem (110.3) von der Master-Notkommunikationseinheit (110.1) zu erhalten,
- die Slave-Notkommunikationseinheit (110.2) dazu konfiguriert ist, als Reaktion auf den Erhalt der Ausgangssteuerdaten über das Backbone-Notkommunikationsleitungssystem (110.3) weitere Ausgangssteuerdaten über eine Slave-Steuereinheit-Notkommunikationsleitung (113.2) an eine Slave-Steuereinheit (112.2) der Slave-Steuervorrichtung (102.2) weiterzuleiten, wobei die Slave-Steuereinheit-Notkommunikationsleitung (113.2) die Slave-Notkommunikationseinheit (110.2) und die Slave-Steuereinheit (112.2) verbindet, wobei
- die Slave-Notkommunikationseinheit (110.2) insbesondere die Ausgangssteuerdaten modifiziert, um die weiteren Ausgangssteuerdaten zu erhalten,
und/oder
- die Slave-Notkommunikationseinheit (110.2) dazu konfiguriert ist, wenigstens in dem Notfallzustand eine Backbone-zu-Slave-Kommunikationsverbindung (114.2) zwischen dem Backbone-Notkommunikationsleitungssystem (110.3) und der Slave-Steuereinheit-Notkommunikationsleitung (113.2) bereitzustellen, wodurch der Transfer der Ausgangssteuerdaten von der Master-Notkommunikationseinheit (110.1) über das Backbone-Notkommunikationsleitungssystem (110.3), die Backbone-zu-Slave-Kommunikationsverbindung (114.2) und das Slave-Steuereinheit-Notkommunikationsleitungssystem (113.2) zu der Slave-Steuereinheit (112.2) hin ermöglicht wird.

6. Steueranordnung nach einem der Ansprüche 2 bis 5, wobei
- die erste Steuervorrichtung (102.1) und/oder die zweite Steuervorrichtung (102.2) ein Fahrzeugführerpult (111.1, 111.2) aufweist, das dazu konfiguriert ist, in einem aktivierten Zustand während des normalen Betriebszustands des Zugs (101) eine Rolle eines Hauptpults (111.1) zu übernehmen, das Steuereingaben für die wenigstens eine gesteuerte Komponente (104.1 bis 104.4, 107.1,107.2) erzeugt,
- die Notkommunikationseinheit (110.1, 110.2) wenigstens in dem Notfallzustand über wenigstens eine Hauptpult-Notkommunikationsleitung (116) mit dem Hauptpult (111.1) verbunden ist, um die Steuereingaben zu erhalten,
- die Notkommunikationseinheit (110.1, 110.2) dazu konfiguriert ist, in dem Notfallzustand wenigstens Teil der Steuereingaben für die wenigstens eine gesteuerte Komponente (104.1 bis 104.4, 107.1, 107.2) über das Backbone-Notkommunikationsleitungssystem (110.3) weiterzuleiten,
- die Hauptpult-Notkommunikationsleitung (116) insbesondere mit einer Steuereingangseinheit (115.1 bis 115.3) des Hauptpults (111.1) verbunden ist, wobei die Steuereingangseinheit (115.1 bis 115.3) dazu konfiguriert ist, die Steuereingaben für die wenigstens eine gesteuerte Komponente (104.1 bis 104.4, 107.1, 107.2) zu erzeugen,
- die Notkommunikationseinheit (110.1, 110.2) insbesondere konfiguriert ist, um erste Steuereingangssignale von der Steuereingangseinheit (115.1 bis 115.3) über die Hauptpult-Notkommunikationsleitung (116) zu erhalten, die ersten Steuereingangssignale in zweite Steuereingaben umzusetzen und die zweiten Steuereingaben über das Backbone-Notkommunikationsleitungssystem (110.3) zu der gesteuerten Komponente (104.1 bis 104.4, 107.1, 107.2) hin weiterzuleiten.

7. Steueranordnung nach einem der Ansprüche 2 bis 6, wobei
- die wenigstens eine Notkommunikationsanordnung (110) eine dritte Notkommunikationseinheit, die der ersten Notkommunikationseinheit (110.1) zugeordnet ist, und/oder eine vierte Notkommunikationseinheit, die der zweiten Notkommunikationseinheit (110.2) zugeordnet ist, aufweist,
und/oder
- die wenigstens eine Notkommunikationseinheit (110.1, 110.2) eine erste Kommunikationsschnittstelle und eine zweite Kommunikationsschnittstelle aufweist, wobei die erste Kommunikationsschnittstelle dazu konfiguriert ist, mit einer Steuereinheit (112.1, 112.2) der ersten Steuervorrichtung (102.1) und/oder der zweiten Steuervorrichtung (102.2) verbunden zu werden, wobei die zweite Kommunikationsschnittstelle konfiguriert ist, um mit dem Backbone-Notkommunikationsleitungssystem (110.3) verbunden zu werden, wobei die wenigstens eine Notkommunikationseinheit (110.1, 110.2) einen Störungs-Sicherheitsmodus hat, der im Fall einer Störung der Notkommunikationseinheit (110.1, 110.2) aktiviert wird, wobei die erste Kommunikationsschnittstelle und die zweite Kommunikationsschnittstelle in dem Störungs-Sicherheitsmodus zum Bilden eines Signalbypasses (114.1, 114.2) verbunden sind.

8. Steueranordnung nach einem der vorhergehenden Ansprüche, wobei
- das Datenbussystem (102.3) und/oder der Notkommunikationskanal wenigstens eine Datenbusleitung aufweist, insbesondere eine serielle Datenbusleitung, wobei die Datenbusleitung insbesondere vom RS485-Typ, vom CAN-Typ oder vom Ethernet-Typ ist,
und/oder
- wenigstens ein Teil des Datenbussystems (102.3) vom Multifunktionsfahrzeugbus-(MVB)-Typ ist,
und/oder
- die wenigstens eine gesteuerte Komponente (104.1 bis 104.4, 107.1, 107.2) eine Komponente, insbesondere eine lokale Steuereinheit, eines Traktionssystems des Zugs (101) und/oder eines Bremssystems des Zugs (101) ist.

9. Steueranordnung nach einem der vorhergehenden Ansprüche, wobei
- der Zug (101) wenigstens ein zwischen dem ersten Fahrzeug und dem zweiten Fahrzeug befindliches Zwischenfahrzeug (101.3, 101.4) aufweist,
- das Datenbussystem (102.3) einen Master-Datenbusabschnitt, der der Master-Steuereinheit (102.1) zugeordnet ist, einen Slave-Datenbusabschnitt, der der Slave-Steuervorrichtung (102.2) zugeordnet ist, und einen Zwischen-Datenbusabschnitt, der dem Zwischenfahrzeug (101.3, 101.4) zugeordnet ist, aufweist, wobei
- der Zwischen-Datenbusabschnitt über eine Zwischendatenbuseinheit (109.1 bis 109.3) mit dem Master-Datenbusabschnitt verbunden ist, wobei die Zwischen-Datenbuseinheit (109.1 bis 109.3) eine Datenbuskopplereinheit und/oder eine Datenbus-Repeater-Einheit ist,
- die Notkommunikationsanordnung (110) dazu konfiguriert ist, in dem Notfallzustand die Zwischen-Datenbuseinheit (109.1 bis 109.3) zu deaktivieren.

10. Zug mit einer Steueranordnung (102) nach einem der vorhergehenden Ansprüche.

11. Verfahren zum Steuern wenigstens einer gesteuerten Komponente (104.1 bis 104.4, 107.1, 107.2) eines Zugs (101) unter Verwendung einer ersten Steuervorrichtung (102.1), die einem ersten Führerstand (101.5) eines ersten Fahrzeugs des Zugs (101) zugeordnet ist, einer zweiten Steuervorrichtung (102.2), die einem zweiten Führerstand (101.6) eines zweiten Fahrzeugs des Zugs (101) zugeordnet ist, eines Datenbussystems (102.3), das die erste Steuervorrichtung (102.1) und die zweite Steuervorrichtung (102.2) mit der gesteuerten Komponente (104.1 bis 104.4, 107.1, 107.2) verbindet, und einer Notkommunikationsanordnung (110), wobei
- die erste Steuervorrichtung (102.1) in einem aktivierten Zustand des ersten Führerstands (101.5) während eines normalen Betriebszustands des Zugs (101) die Rolle einer Master-Steuervorrichtung (102.1) übernimmt, welche die wenigstens eine gesteuerte Komponente (104.1 bis 104.4, 107.1, 107.2) über das Datenbussystem (102.3) steuert,
- die zweite Steuervorrichtung (102.2) in einem aktivierten Zustand des zweiten Führerstands (101.6) während des normalen Betriebszustands des Zugs (101) die Rolle der Master-Steuervorrichtung (102.1) übernimmt, welche die wenigstens eine gesteuerte Komponente (104.1 bis 104.4, 107.1, 107.2) über das Datenbussystem (102.3) steuert,
**dadurch gekennzeichnet, dass**
- die Notkommunikationsanordnung (110) in einem Notfallzustand mit unterbrochener Kommunikation zwischen der Master-Steuervorrichtung (102.1) und der wenigstens einen gesteuerten Komponente (104.1 bis 104.4, 107.1, 107.2) über das Datenbussystem (102.3) einen von dem Datenbussystem (102.3) separaten Notkommunikationskanal zwischen der Master-Steuervorrichtung (102.1) und einer Slave-Steuervorrichtung (102.2) bereitzustellen, wobei die Slave-Steuervorrichtung (102.2) diejenige der ersten Steuervorrichtung (102.1) und der zweiten Steuervorrichtung (102.2) ist, die nicht die Master-Steuervorrichtung (102.1) bildet,wobei
- die Master-Steuervorrichtung (102.1) in dem Notfallzustand die wenigstens eine gesteuerte Komponente (104.1 bis 104.4, 107.1, 107.2) über den Notkommunikationskanal, die Slave-Steuervorrichtung (102.2) und einen nicht unterbrochenen Teil des Datenbussystems (102.3) zwischen der Slave-Steuervorrichtung (102.2) und der wenigstens einen gesteuerten Komponente (104.1 bis 104.4, 107.1, 107.2) steuert.

12. Verfahren nach Anspruch 11, wobei
- die Kommunikation zwischen der Master-Steuervorrichtung (102.1) und der wenigstens einen gesteuerten Komponente (104.1 bis 104.4, 107.1, 107.2) über wenigstens eine Notkommunikationseinheit bereitgestellt wird, insbesondere über eine Master-Notkommunikationseinheit (110.1), die der Master-Steuereinheit (112.1) zugeordnet ist, und eine Slave-Notkommunikationseinheit (110.2), die der Slave-Steuereinheit (112.2) zugeordnet ist,
und/oder
- die Master-Steuervorrichtung (102.1) und die Slave-Steuervorrichtung (102.2) über wenigstens ein Backbone-Notkommunikationsleitungssystem (110.3) verbunden werden, das von dem Datenbussystem (102.3) getrennt ist, wobei das Backbone-Notkommunikationsleitungssystem (110.3) insbesondere ein Backbone-Notfall-Datenbussystem ist, insbesondere ein serielles Notfall-Datenbussystem ist, wobei das Backbone-Notkommunikationsleitungssystem (110.3) insbesondere eine erste Notkommunikationseinheit (110.1) und eine zweite Notkommunikationseinheit (110.2) der Notkommunikationsanordnung (110) verbindet.

13. Verfahren nach Anspruch 12, wobei
- die erste Steuervorrichtung (102.1) und/oder die zweite Steuervorrichtung (102.2) eine Steuereinheit (112.1, 112.2) aufweist, die dazu konfiguriert ist, in einem aktivierten Zustand die Rolle einer Master-Steuereinheit (112.1) zu übernehmen, die während des normalen Betriebszustands des Zugs (101) die wenigstens eine gesteuerte Komponente (104.1 bis 104.4, 107.1, 107.2) über das Datenbussystem (102.3) steuert,
- die Notkommunikationseinheit (110.1, 110.2) wenigstens in dem Notfallzustand über eine Master-Steuereinheit-Notkommunikationsleitung (113.1), insbesondere über eine Master-Notfall-Datenbusleitung, mit der Master-Steuereinheit (112.1) verbunden ist, wobei die Master-Notfall-Datenbusleitung insbesondere eine serielle Notfall-Datenbusleitung ist, wobei
- die Notkommunikationseinheit (110.1, 110.2) wenigstens in dem Notfallzustand über die Master-Steuereinheit-Notkommunikationsleitung (113.1) Eingangssteuerdaten von der Steuereinheit (112.1, 112.2) erhält,
und
- die Notkommunikationseinheit (110.1, 110.2) insbesondere ferner wenigstens in dem Notfallzustand Ausgangssteuerdaten, die von den Eingangssteuerdaten abgeleitet sind, über das Backbone-Notkommunikationsleitungssystem (110.3) zu der gesteuerten Komponente (104.1 bis 104.4, 107.1, 107.2) hin weiterleitet, wobei die Notkommunikationseinheit (110.1, 110.2) insbesondere die Eingangssteuerdaten modifiziert, um die Ausgangssteuerdaten zu erhalten, und/oder
- die Notkommunikationseinheit (110.1, 110.2) fernerwenigstens in dem Notfallzustand eine Master-zu-Backbone-Kommunikationsverbindung zwischen der Master-Steuereinheit-Notkommunikationsleitung (113.1) und dem Backbone-Notkommunikationsleitungssystem (110.3) bereitstellt, wodurch der Transfer der Eingangssteuerdaten von der Master-Steuereinheit (112.1) über die Master-Steuereinheit-Notkommunikationsleitung (113.1), die Master-zu-Backbone-Notkommunikationsverbindung und das Backbone-Notkommunikationsleitungssystem (110.3) zu der gesteuerten Komponente (104.1 bis 104.4, 107.1, 107.2) hin ermöglicht wird.

14. Verfahren nach Anspruch 13, wobei
- die zweite Notkommunikation wenigstens in dem Notfallzustand die Ausgangssteuerdaten über das Backbone-Notkommunikationsleitungssystem (110.3) von der ersten Notkommunikationseinheit (110.1) erhält,
- die zweite Notkommunikationseinheit (110.2) als Reaktion auf den Erhalt der Ausgangssteuerdaten über das Backbone-Notkommunikationsleitungssystem (110.3) weitere Ausgangssteuerdaten über eine Slave-Steuereinheit-Notkommunikationsleitung (113.2) an die zweite Steuereinheit weiterleitet, die eine Slave-Steuereinheit (112.2) bildet, wobei die Slave-Steuereinheit-Notkommunikationsleitung (113.2) die zweite Notkommunikationseinheit (110.2) und die Slave-Steuereinheit (112.2) verbindet, wobei
- die zweite Notkommunikationseinheit (110.2) insbesondere die Ausgangssteuerdaten modifiziert, um die weiteren Ausgangssteuerdaten zu erhalten,
und/oder
- die zweite Notkommunikationseinheit (110.2) insbesondere wenigstens in dem Notfallzustand eine Backbone-zu-Slave-Kommunikationsverbindung zwischen dem Backbone-Notkommunikationsleitungssystem (110.3) und der Slave-Steuereinheit-Notkommunikationsleitung (113.2) bereitstellt, wodurch der Transfer der Ausgangssteuerdaten von der ersten Notkommunikationseinheit (110.1) über das Notkommunikationsleitungssystem, die Backbone-zu-Slave-Kommunikationsverbindung und das Slave-Steuereinheit-Notkommunikationsleitungssystem (113.2) zu der zweiten Steuereinheit (112.2) hin ermöglicht wird.

15. Verfahren nach einem der Ansprüche 12 bis 14, wobei
- die erste Steuervorrichtung (102.1) und/oder die zweite Steuervorrichtung (102.2) ein Fahrzeugführerpult (111.1, 111.2) aufweist, das in einem aktivierten Zustand während des normalen Betriebszustands des Zugs (101) eine Rolle eines Hauptpults (111.1) übernimmt, das Steuereingaben für die wenigstens eine gesteuerte Komponente (104.1 bis 104.4, 107.1,107.2) erzeugt,
- die Notkommunikationseinheit (110.1, 110.2) wenigstens in dem Notfallzustand über wenigstens eine Hauptpult-Notkommunikationsleitung (116) mit dem Hauptpult (111.1) verbunden ist, um die Steuereingaben zu erhalten, wobei
- die Notkommunikationseinheit (110.1, 110.2) in dem Notfallzustand wenigstens Teil der Steuereingaben für die wenigstens eine gesteuerte Komponente (104.1 bis 104.4, 107.1, 107.2) über das Backbone-Notkommunikationsleitungssystem (110.3) weiterleitet,
- die Hauptpult-Notkommunikationsleitung (116) insbesondere mit einer Steuereingangseinheit (115.1 bis 115.3) des Hauptpults (111.1) verbunden ist, wobei die Steuereingangseinheit (115.1 bis 115.3) die Steuereingaben für die wenigstens eine gesteuerte Komponente (104.1 bis 104.4, 107.1, 107.2) erzeugt,
- die Notkommunikationseinheit (110.1, 110.2) insbesondere erste Steuereingangssignale von der Steuereingangseinheit (115.1 bis 115.3) über die zweite Notkommunikationsleitung erhält, die ersten Steuereingangssignale in zweite Steuereingangssignale umsetzt und die zweiten Steuereingangssignale über das Backbone-Notkommunikationsleitungssystem (110.3) zu der gesteuerten Komponente (104.1 bis 104.4, 107.1, 107.2) hin weiterleitet.

16. Verfahren nach einem der Ansprüche 12 bis 15, wobei
- die wenigstens eine Notkommunikationsanordnung (110) eine dritte Notkommunikationseinheit, die der ersten Notkommunikationseinheit (110.1) zugeordnet ist, und/oder eine vierte Notkommunikationseinheit, die der zweiten Notkommunikationseinheit (110.2) zugeordnet ist, aufweist,
und/oder
- die wenigstens eine Notkommunikationseinheit (110.1, 110.2) eine erste Kommunikationsschnittstelle und eine zweite Kommunikationsschnittstelle aufweist, wobei die erste Kommunikationsschnittstelle mit einer Steuereinheit (112.1, 112.2) der ersten Steuervorrichtung (102.1) und/oder der zweiten Steuervorrichtung (102.2) verbunden wird, wobei die zweite Kommunikationsschnittstelle mit dem Backbone-Notkommunikationsleitungssystem (110.3) verbunden wird, wobei im Fall einer Störung der Notkommunikationseinheit (110.1, 110.2) ein Störungs-Sicherheitsmodus aktiviert wird, wobei die erste Kommunikationsschnittstelle und die zweite Kommunikationsschnittstelle in dem Störungs-Sicherheitsmodus verbunden werden, um einem Signalbypass (114.1, 114.2) zu bilden.

## Revendications

1. Dispositif de commande pour une rame ferroviaire, comprenant
- un premier dispositif de commande (102.1) associé à un premier poste de conduite (101.5) d'un premier véhicule de ladite rame (101);
- un second dispositif de commande (102.2) associé à un second poste de conduite (101.6) d'un second véhicule de ladite rame (101);
- un système de bus de données (102.3) connectant ledit premier dispositif de commande (102.1) et ledit second dispositif de commande (102.2) à au moins un composant commandé (104.1 à 104.4, 107.1, 107.2) de ladite rame (101);
- ledit premier dispositif de commande (102.1) étant configuré pour assumer, dans un état activé dudit premier poste de conduite (101.5) pendant un état opérationnel normal de ladite rame (101), un rôle de dispositif de commande maître (102.1) commandant ledit au moins un composant commandé (104.1 à 104.4, 107.1, 107.2) via ledit système de bus de données (102.3);
- ledit second dispositif de commande (102.2) étant configuré pour assumer, dans un état activé dudit second poste de conduite (101.6) pendant ledit état opérationnel normal de ladite rame (101), ledit rôle de dispositif de commande maître (102.1) commandant ledit au moins un composant commandé (104.1 à 104.4, 107.1, 107.2) via ledit système de bus de données (102.3);
**caractérisé en ce que**
- un dispositif de communication d'urgence (110) est prévu;
- ledit dispositif de communication d'urgence (110) étant configuré pour fournir, dans un état d'urgence avec une communication interrompue entre ledit dispositif de commande maître (102.1) et ledit au moins un composant commandé (104.1 à 104.4, 107.1, 107.2) via ledit système de bus de données (102.3), un canal de communication d'urgence séparé dudit système de bus de données (102.3) entre ledit dispositif de commande maître (102.1) et un dispositif de commande asservi (102.2), ledit dispositif de commande asservi (102.2) étant celui dudit premier dispositif de commande (102.1) et ledit second dispositif de commande (102.2) ne formant pas ledit dispositif de commande maître (102.1);
- ledit dispositif de commande maître (102.1), dans ledit état d'urgence, commandant ledit au moins un composant commandé (104.1 à 104.4, 107.1, 107.2) via ledit canal de communication d'urgence, ledit dispositif de commande asservi (102.2) et une partie non interrompue dudit système de bus de données (102.3) entre ledit dispositif de commande asservi (102.2) et ledit au moins un composant commandé (104.1 à 104.4, 107.1, 107.2).

2. Dispositif de commande selon la revendication 1, où
- ledit dispositif de communication d'urgence (110) comprend au moins une unité de communication d'urgence (110.1, 110.2), ledit dispositif de communication d'urgence (110), en particulier, comprenant une unité de communication d'urgence maîtresse (110.1) associée à ladite unité de commande maîtresse (112.1) et une unité de communication d'urgence asservie (110.2) associée à ladite unité de commande asservie (112.2);
et/ou
- ledit dispositif de communication d'urgence (110) comprend au moins un système de ligne de communication d'urgence dorsal (110.3) séparé dudit système de bus de données (102.3) et configuré pour connecter ledit dispositif de commande maître (102.1) et ledit dispositif de commande asservi (102.2), ledit système de ligne de communication d'urgence dorsal (110.3), en particulier, étant un système de bus de données d'urgence dorsal, en particulier, un système de bus de données d'urgence en série, ledit système de ligne de communication d'urgence dorsal (110.3), en particulier, connectant une unité de communication d'urgence maîtresse (110.1) et une unité de communication d'urgence asservie (110.2) dudit dispositif de communication d'urgence (110).

3. Dispositif de commande selon la revendication 2, où
- au moins un dudit premier dispositif de commande (102.1) et dudit second dispositif de commande (102.2) comprend une unité de commande (112.1, 112.2) est configurée pour assumer, dans un état activé, un rôle d'unité de commande maîtresse (112.1) commandant, pendant ledit état opérationnel normal de ladite rame (101), ledit au moins un composant commandé (104.1 à 104.4, 107.1, 107.2) via ledit système de bus de données (102.3);
- ladite unité de communication d'urgence (110.1, 110.2), au moins dans ledit état d'urgence, étant connectée à ladite unité de commande maîtresse (112.1) via une ligne de communication d'urgence d'unité de commande maîtresse (113.1), en particulier, via une ligne de bus de données d'urgence maîtresse, ladite ligne de bus de données d'urgence maîtresse, en particulier, étant une ligne de bus de données d'urgence en série.

4. Dispositif de commande selon la revendication 3, où
- ladite unité de communication d'urgence (110.1, 110.2) est configurée, au moins dans ledit état d'urgence, pour recevoir des données de commande en entrée via ladite ligne de communication d'urgence d'unité de commande maîtresse (113.1) à partir de ladite unité de commande maîtresse (112.1)
et
- ladite unité de communication d'urgence (110.1, 110.2) étant en outre configurée pour transmettre, au moins dans ledit état d'urgence, des données de commande en sortie dérivées desdites données de commande en entrée vers ledit composant commandé (104.1 à 104.4, 107.1, 107.2) via ledit système de ligne de communication d'urgence dorsal (110.3), ladite unité de communication d'urgence (110.1, 110.2), en particulier, modifiant lesdites données de commande en entrée pour obtenir lesdites données de commande en sortie;
et/ou
- ladite unité de communication d'urgence (110.1, 110.2) étant en outre configurée pour fournir, au moins dans ledit état d'urgence, une connexion de communication maîtresse-dorsale (114.1) entre ladite ligne de communication d'urgence d'unité de commande maîtresse (113.1) et ledit système de ligne de communication d'urgence dorsal (110.3), permettant ainsi le transfert desdites données de commande en entrée à partir de ladite unité de commande maîtresse (112.1) via ladite ligne de communication d'urgence d'unité de commande maîtresse (113.1), ladite connexion de communication maîtresse-dorsale (114.1) et ledit système de ligne de communication d'urgence dorsal (110.3) vers ledit composant commandé (104.1 à 104.4, 107.1, 107.2).

5. Dispositif de commande selon la revendication 4, où
- une unité de communication d'urgence asservie (110.2) dudit dispositif de communication d'urgence (110) est configurée pour recevoir, au moins dans ledit état d'urgence, lesdites données de commande en sortie via ledit système de ligne de communication d'urgence dorsal (110.3) à partir de ladite unité de communication d'urgence maîtresse (110.1),
- ladite unité de communication d'urgence asservie (110.2) étant configurée pour transmettre, en réponse à la réception desdites données de commande en sortie via ledit système de ligne de communication d'urgence dorsal (110.3), d'ultérieures données de commande en sortie à une unité de commande asservie (112.2) dudit dispositif de commande asservi (102.2) via une ligne de communication d'urgence d'unité de commande asservie (113.2), ladite ligne de communication d'urgence d'unité de commande asservie (113.2) connectant ladite unité de communication d'urgence asservie (110.2) et ladite unité de commande asservie (112.2);
- ladite unité de communication d'urgence asservie (110.2), en particulier, modifiant lesdites données de commande en sortie pour obtenir lesdites ultérieures données de commande en sortie;
et/ou
- ladite unité de communication d'urgence asservie (110.2) étant configurée pour fournir, au moins dans ledit état d'urgence, une connexion de communication dorsale-asservie (114.2) entre ledit système de ligne de communication d'urgence dorsal (110.3) et ladite ligne de communication d'urgence d'unité de commande asservie (113.2), permettant ainsi le transfert desdites données de commande en sortie à partir de ladite unité de communication d'urgence maîtresse (110.1) via ledit système de ligne de communication d'urgence dorsal (110.3), ladite connexion de communication dorsale-asservie (114.2) et ledit système de ligne de communication d'urgence d'unité de commande asservie (113.2) vers ladite unité de commande asservie (112.2).

6. Dispositif de commande selon une quelconque des revendications 2 à 5, où
- au moins un dudit premier dispositif de commande (102.1) et dudit second dispositif de commande (102.2) comprend une console de conducteur (111.1, 111.2) configurée pour assumer, dans un état activé pendant ledit état opérationnel normal de ladite rame (101), un rôle de console maîtresse (111.1) générant une entrée de commande pour ledit au moins un composant commandé (104.1 à 104.4, 107.1, 107.2);
- ladite unité de communication d'urgence (110.1, 110.2), au moins dans ledit état d'urgence, étant connectée à ladite console maîtresse (111.1) via au moins une ligne de communication d'urgence de console maîtresse (116) pour recevoir ladite entrée de commande;
- ladite unité de communication d'urgence (110.1, 110.2) étant configurée pour transmettre, dans ledit état d'urgence, au moins une partie de ladite entrée de commande pour ledit au moins un composant commandé (104.1 à 104.4, 107.1, 107.2) via ledit système de ligne de communication d'urgence dorsal (110.3);
- ladite ligne de communication d'urgence de console maîtresse (116), en particulier, étant connectée à une unité d'entrée de commande (115.1 à 115.3) de ladite console maîtresse (111.1), ladite unité d'entrée de commande (115.1 à 115.3) étant configurée pour générer ladite entrée de commande pour ledit au moins un composant commandé (104.1 à 104.4, 107.1, 107.2);
- ladite unité de communication d'urgence (110.1, 110.2), en particulier, étant configurée pour recevoir des premiers signaux d'entrée de commande via ladite ligne de communication d'urgence de console maîtresse (116) à partir de ladite unité d'entrée de commande (115.1 à 115.3), pour convertir lesdits premiers signaux d'entrée de commande en une seconde entrée de commande et pour transmettre ladite seconde entrée de commande vers ledit composant commandé (104.1 à 104.4, 107.1, 107.2) via ledit système de ligne de communication d'urgence dorsal (110.3).

7. Dispositif de commande selon une quelconque des revendications 2 à 6, où
- ledit au moins un dispositif de communication d'urgence (110) comprend une troisième unité de communication d'urgence associée à ladite première unité de communication d'urgence (110.1) et/ou une quatrième unité de communication d'urgence associée à ladite seconde unité de communication d'urgence (110.2);
et/ou
- ladite au moins une unité de communication d'urgence (110.1, 110.2) comprend une première interface de communication et une seconde interface de communication, ladite première interface de communication étant configurée pour être connectée à une unité de commande (112.1, 112.2) d'au moins un dudit premier dispositif de commande (102.1) et dudit second dispositif de commande (102.2), ladite seconde interface de communication étant configurée pour être connectée audit système de ligne de communication d'urgence dorsal (110.3); ladite au moins une unité de communication d'urgence (110.1, 110.2) ayant un mode de sécurité de dysfonctionnement activé en cas de dysfonctionnement de ladite unité de communication d'urgence (110.1, 110.2), ladite première interface de communication et ladite seconde interface de communication, dans ledit mode de sécurité de dysfonctionnement, étant connectées pour former une dérivation de signal (114.1, 114.2).

8. Dispositif de commande selon une quelconque des revendications précédentes, où
- au moins un dudit système de bus de données (102.3) et dudit canal de communication d'urgence comprend au moins une ligne de bus de données, en particulier une ligne de bus de données en série, ladite ligne de bus de données, en particulier, étant de type RS485, de type CAN ou de type Ethernet;
et/ou
- au moins une partie dudit système de bus de données (102.3) est de type à bus de véhicule multifonctions (MVB)
et/ou
- ledit au moins un composant commandé (104.1 à 104.4, 107.1, 107.2) est un composant, en particulier, une unité de commande locale, d'au moins un d'un système de traction de ladite rame (101) et un système de freinage de ladite rame (101).

9. Dispositif de commande selon une quelconque des revendications précédentes, où
- ladite rame (101) comprend au moins un véhicule intermédiaire (101.3, 101.4) situé entre ledit premier véhicule et ledit second véhicule;
- ledit système de bus de données (102.3) comprenant une section de bus de données maîtresse associée audit dispositif de commande maître (102.1), une section de bus de données asservie associée audit dispositif de commande asservi (102.2) et une section de bus de données intermédiaire associée audit véhicule intermédiaire (101.3, 101.4);
- ladite section de bus de données intermédiaire étant connectée à ladite section de bus de données maîtresse via une unité de bus de données intermédiaire (109.1 à 109.3), ladite unité de bus de données intermédiaire (109.1 à 109.3) étant au moins une d'une unité de couplage de bus de données et une unité de répéteur de bus de données;
- ledit dispositif de communication d'urgence (110) étant configuré pour désactiver, dans ledit état d'urgence, ladite unité de bus de données intermédiaire (109.1 à 109.3).

10. Rame ferroviaire avec un dispositif de commande (102) selon une quelconque des revendications précédentes.

11. Procédé pour commander au moins un composant commandé (104.1 à 104.4, 107.1, 107.2) d'une rame ferroviaire (101) utilisant un premier dispositif de commande (102.1) associé à un premier poste de conduite (101.5) d'un premier véhicule de ladite rame (101), un second dispositif de commande (102.2) associé à un second poste de conduite (101.6) d'un second véhicule de ladite rame (101), un système de bus de données (102.3) connectant ledit premier dispositif de commande (102.1) et ledit second dispositif de commande (102.2) audit composant commandé (104.1 à 104.4, 107.1, 107.2) et un dispositif de communication d'urgence (110), où
- ledit premier dispositif de commande (102.1) assume, dans un état activé dudit premier poste de conduite (101.5) pendant un état opérationnel normal de ladite rame (101), un rôle de dispositif de commande maître (102.1) commandant ledit au moins un composant commandé (104.1 à 104.4, 107.1, 107.2) via ledit système de bus de données (102.3);
- ledit second dispositif de commande (102.2) assume, dans un état activé dudit second poste de conduite (101.6) pendant ledit état opérationnel normal de ladite rame (101), ledit rôle de dispositif de commande maître (102.1) commandant ledit au moins un composant commandé (104.1 à 104.4, 107.1, 107.2) via ledit système de bus de données (102.3);
**caractérisé en ce que**
- ledit dispositif de communication d'urgence (110), dans un état d'urgence avec une communication interrompue entre ledit dispositif de commande maître (102.1) et ledit au moins un composant commandé (104.1 à 104.4, 107.1, 107.2) via ledit système de bus de données (102.3), fournit un canal de communication d'urgence séparé dudit système de bus de données (102.3) entre ledit dispositif de commande maître (102.1) et un dispositif de commande asservi (102.2), ledit dispositif de commande asservi (102.2) étant celui dudit premier dispositif de commande (102.1) et dudit second dispositif de commande (102.2) ne formant pas ledit dispositif de commande maître (102.1);
- ledit dispositif de commande maître (102.1), dans ledit état d'urgence, commandant ledit au moins un composant commandé (104.1 à 104.4, 107.1, 107.2) via ledit canal de communication d'urgence, ledit dispositif de commande asservi (102.2) et une partie non interrompue dudit système de bus de données (102.3) entre ledit dispositif de commande asservi (102.2) et ledit au moins un composant commandé (104.1 à 104.4, 107.1, 107.2).

12. Procédé selon la revendication 11, où
- la communication entre ledit dispositif de commande maître (102.1) et ledit au moins un composant commandé (104.1 à 104.4, 107.1, 107.2) est fournie via au moins une unité de communication d'urgence, en particulier, via une unité de communication d'urgence maîtresse (110.1) associée à ladite unité de commande maîtresse (112.1) et une unité de communication d'urgence asservie (110.2) associée à ladite unité de commande asservie (112.2);
et/ou
- ledit dispositif de commande maître (102.1) et ledit dispositif de commande asservi (102.2) sont connectés via au moins un système de ligne de communication d'urgence dorsal (110.3) séparé dudit système de bus de données (102.3), ledit système de ligne de communication d'urgence dorsal (110.3), en particulier, étant un système de bus de données d'urgence dorsal, en particulier, un système de bus de données d'urgence en série, ledit système de ligne de communication d'urgence dorsal (110.3), en particulier, connectant une première unité de communication d'urgence (110.1) et une seconde unité de communication d'urgence (110.2) dudit dispositif de communication d'urgence (110).

13. Procédé selon la revendication 12, où
- au moins un dudit premier dispositif de commande (102.1) et dudit second dispositif de commande (102.2) comprend une unité de commande (112.1, 112.2) configurée pour assumer, dans un état activé, un rôle d'unité de commande maîtresse (112.1) commandant, pendant ledit état opérationnel normal de ladite rame (101), ledit au moins un composant commandé (104.1 à 104.4, 107.1, 107.2) via ledit système de bus de données (102.3);
- ladite unité de communication d'urgence (110.1, 110.2), au moins dans ledit état d'urgence, étant connectée à ladite unité de commande maîtresse (112.1) via une ligne de communication d'urgence d'unité de commande maîtresse (113.1), en particulier, via une ligne de bus de données d'urgence maîtresse, ladite ligne de bus de données d'urgence maîtresse, en particulier, étant une ligne de bus de données d'urgence en série, où
- ladite unité de communication d'urgence (110.1, 110.2), au moins dans ledit état d'urgence, reçoit en particulier des données de commande en entrée via ladite ligne de communication d'urgence d'unité de commande maîtresse (113.1) à partir de ladite unité de commande (112.1, 112.2)
et
- ladite unité de communication d'urgence (110.1, 110.2), en particulier, transmet ultérieurement, au moins dans ledit état d'urgence, des données de commande en sortie dérivées desdites données de commande en entrée vers ledit composant commandé (104.1 à 104.4, 107.1, 107.2) via ledit système de ligne de communication d'urgence dorsal (110.3), ladite unité de communication d'urgence (110.1, 110.2), en particulier, modifiant lesdites données de commande en entrée pour obtenir lesdites données de commande en sortie;
et/ou
- ladite unité de communication d'urgence (110.1, 110.2), en particulier, fournit en outre, au moins dans ledit état d'urgence, une connexion de communication maîtresse-dorsale (114.1) entre ladite ligne de communication d'urgence d'unité de commande maîtresse (113.1) et ledit système de ligne de communication d'urgence dorsal (110.3), permettant ainsi le transfert desdites données de commande en entrée à partir de ladite unité de commande maîtresse (112.1) via ladite ligne de communication d'urgence d'unité de commande maîtresse (113.1), ladite connexion de communication maîtresse-dorsale et ledit système de ligne de communication d'urgence dorsal (110.3) vers ledit composant commandé (104.1 à 104.4, 107.1, 107.2).

14. Procédé selon la revendication 13, où
- ladite seconde communication d'urgence, au moins dans ledit état d'urgence, reçoit lesdites données de commande en sortie via ledit système de ligne de communication d'urgence dorsal (110.3) à partir de ladite première unité de communication d'urgence (110.1),
- ladite seconde unité de communication d'urgence (110.2) transmet, en réponse à la réception desdites données de commande en sortie via ledit système de ligne de communication d'urgence dorsal (110.3), d'ultérieures données de commande en sortie à une seconde unité de commande formant une unité de commande asservie (112.2) via une ligne de communication d'urgence d'unité de commande asservie (113.2), ladite ligne de communication d'urgence d'unité de commande asservie (113.2) connectant ladite seconde unité de communication d'urgence (110.2) et ladite unité de commande asservie (112.2); où
- ladite seconde unité de communication d'urgence (110.2), en particulier, modifie lesdites données de commande en sortie pour obtenir lesdites ultérieures données de commande en sortie;
et/ou
- ladite seconde unité de communication d'urgence (110.2), en particulier, au moins dans ledit état d'urgence, fournit une connexion de communication dorsale-asservie (114.2) entre ledit système de ligne de communication d'urgence dorsal (110.3) et ladite ligne de communication d'urgence d'unité de commande asservie (113.2), permettant ainsi le transfert desdites données de commande en sortie à partir de ladite première unité de communication d'urgence (110.1) via ledit système de ligne de communication d'urgence, ladite connexion de communication dorsale-asservie et ledit système de ligne de communication d'urgence d'unité de commande asservie (113.2) vers ladite seconde unité de commande.

15. Procédé selon une quelconque des revendications 12 à 14, où
- au moins un dudit premier dispositif de commande (102.1) et dudit second dispositif de commande (102.2) comprend une console de conducteur assumant, dans un état activé pendant ledit état opérationnel normal de ladite rame (101), un rôle de console maîtresse (111.1) générant une entrée de commande pour ledit au moins un composant commandé (104.1 à 104.4, 107.1, 107.2);
- ladite unité de communication d'urgence (110.1, 110.2), au moins dans ledit état d'urgence, étant connectée à ladite console maîtresse (111.1) via au moins une ligne de communication d'urgence de console maîtresse (116) pour recevoir ladite entrée de commande;
- ladite unité de communication d'urgence (110.1, 110.2) transmettant, dans ledit état d'urgence, au moins une partie de ladite entrée de commande pour ledit au moins un composant commandé (104.1 à 104.4, 107.1, 107.2) via ledit système de ligne de communication d'urgence dorsal (110.3);
- ladite ligne de communication d'urgence de console maîtresse (116), en particulier, étant connectée à une unité d'entrée de commande (115.1 à 115.3) de ladite console maîtresse (111.1), ladite unité d'entrée de commande (115.1 à 115.3) générant ladite entrée de commande pour ledit au moins un composant commandé (104.1 à 104.4, 107.1, 107.2);
- ladite unité de communication d'urgence (110.1, 110.2), en particulier, recevant des premiers signaux d'entrée de commande via ladite seconde ligne de communication d'urgence à partir de ladite unité d'entrée de commande (115.1 à 115.3), convertissant lesdits premiers signaux d'entrée de commande en seconds signaux d'entrée de commande et transmettant lesdits seconds signaux d'entrée de commande vers ledit composant commandé (104.1 à 104.4, 107.1, 107.2) via ledit système de ligne de communication d'urgence dorsal (110.3).

16. Procédé selon une quelconque des revendications 12 à 15, où
- ledit au moins un dispositif de communication d'urgence (110) comprend une troisième unité de communication d'urgence associée à ladite première unité de communication d'urgence (110.1) et/ou une quatrième unité de communication d'urgence associée à ladite seconde unité de communication d'urgence (110.2);
et/ou
- ladite au moins une unité de communication d'urgence (110.1,110.2) comprend une première interface de communication et une seconde interface de communication, ladite première interface de communication étant connectée à une unité de commande (112.1, 112.2) d'au moins un dudit premier dispositif de commande (102.1) et dudit second dispositif de commande (102.2), ladite seconde interface de communication étant connectée audit système de ligne de communication d'urgence dorsal (110.3); où, en cas de dysfonctionnement de ladite unité de communication d'urgence (110.1, 110.2), un mode de sécurité de dysfonctionnement est activé, ladite première interface de communication et ladite seconde interface de communication, dans ledit mode de sécurité de dysfonctionnement, étant connectées pour former une dérivation de signal.
